# EUROPEAN PATENT APPLICATION

(11) **EP 4 794 253 A1**
(43) Date of publication of application: **19.08.2026**
(21) Application number: 26158126.8
(22) Date of filing: 12.02.2026
(51) Int. Cl.: H04L 9/00, H04L 9/30

(54) **SYSTEM FOR SECURE QUANDLE-BASED CRYPTOGRAPHY IN DYNAMIC NETWORK ENVIRONMENTS**

(30) Priority: 12.02.2025 IL 31898325; 18.08.2025 US 202519302522
(71) Applicant: Mellanox Technologies, Ltd., 2069200 Yokneam (IL)
(72) Inventor: MENTOVICH, Elad, 2069200 Yokneam (IL); ZAHAVI, Eitan, 2069200 Yokneam (IL); HASSON RUSO, Ran, 2069200 Yokneam (IL); COHEN, Eliahu, 5290002 Ramat Gan (IL); CARMI, Avishy, 2069200 Yokneam (IL)
(74) Representative: Mathys & Squire

(57) **Abstract**

Systems, computer program products, and methods are described for secure quandle-based cryptography in dynamic network environments. An example system may include a plurality of entities, wherein a first entity is configured to detect a presence of a second entity in an immediate vicinity and transmit a first communication request to the second entity. The second entity, upon receiving the first communication request, may encrypt primary information associated with the second entity using a quandle-based cryptography framework. The encrypted second primary information, along with second supplementary information, may then be transmitted to the first entity as a response to the communication request.

## Description

### TECHNOLOGICAL FIELD

Example embodiments of the present disclosure relate to secure communication in dynamic network environments, and more particularly, to methods and systems for establishing and maintaining secure data exchanges between computing devices, such as autonomous vehicles, drones, or mobile computing units, using quandle-based cryptography techniques.

### BACKGROUND

In modern network environments, secure communication between entities is of significance, particularly in dynamic and ad-hoc networks where devices frequently connect and disconnect based on proximity, changing conditions, or temporary requirements. Conventional encryption techniques often rely on complex key management and pre-established trust relationships, making them less suitable for ad-hoc scenarios where entities may not have prior knowledge of one another. Autonomous vehicles, drones, and other mobile computing devices frequently operate in such environments, where they need to securely exchange information for tasks like coordinating movements, sharing sensor data, responding to emergency situations, and/or the like. There is a need for secure data exchanges in dynamic networks that allows entities to encrypt sensitive information with enhanced security measures and adjust encryption levels based on contextual factors, such as trust levels or communication urgency.

Applicant has identified a number of deficiencies and problems associated with secure communication in dynamic network environments. Many of these identified problems have been solved by developing solutions that are included in embodiments of the present disclosure, many examples of which are described in detail herein.

### GENERAL DESCRIPTION

The invention is defined by the claims. In order to illustrate the invention, aspects and embodiments which may or may not fall within the scope of the claims are described herein.

Systems, methods, and computer program products are therefore provided for secure communication in dynamic network environments.

In one aspect, a system for secure quandle-based cryptography in dynamic network environments is presented. The system comprising: a first entity; and a second entity; wherein the first entity is configured to: detect a presence of the second entity in an immediate vicinity of the first entity; and in response, transmit, to the second entity, a first communication request to establish a communication with the second entity, and wherein the second entity is configured to: encrypt, using a quandle-based cryptography framework, second primary information (sp) associated with the second entity using a second public key (e2) in response to the first communication request; and transmit the encrypted second primary information (esp) and second supplementary information (ss) associated with the second entity to the first entity.

In some embodiments, the second public key (e2) is associated with the second entity.

In some embodiments, the second entity is one of a second set of entities associated with a second owner, and wherein the second public key (e2) is associated with the second set of entities.

In some embodiments, the second entity is further configured to: transmit, to the first entity, a second communication request following the transmission of the encrypted second primary information (esp) and second supplementary information (ss).

In some embodiments, the first entity is further configured to: encrypt, using the quandle-based cryptography framework, first primary information (fp) associated with the first entity using a first public key (e1), wherein the first public key (e1) is associated with the first entity; and transmit the encrypted first primary information (efp) and first supplementary information (fs) associated with the second entity to the first entity in response to the second communication request.

In some embodiments, the first entity is one of a first set of entities associated with a first owner, and wherein the first public key (e1) is associated with the first set of entities.

In some embodiments, the second entity is further configured to: generate the encrypted second primary information (esp) based on the second primary information (sp), an encoding variable (y), and the second public key (e2), wherein *esp = sp ▷ y,* wherein ▷ is a binary operation that satisfy axioms of a quandle, wherein 0 ≤ *sp* ≤ *n* - 1, wherein *n* is a composite number of the form, *n* = *p* · *q,* and wherein p and q are prime numbers.

In some embodiments, $sp ▷ y = y {\left(\frac{sp}{y}\right)}^{e 2}$, wherein 1 *< e*2 < *ϕ*(*n*), wherein *ϕ*(*n*) is Euler's totient function, and wherein *ϕ*(*n*) = *ϕ*(*p* · *q*) *=* (*p -* 1) · (*q -* 1).

In some embodiments, the second entity is further configured to: establish an initial communication link with the first entity, and wherein transmitting the encrypted second primary information (esp) comprises using the initial communication link.

In some embodiments, the second public key (e2) is a short encryption key having a length that is less than or equal to 1024 bits.

In some embodiments, the second entity is configured to: transition from the initial communication link to a sustained communication link upon successful transmission of the encrypted second primary information (esp) and second supplementary information (ss) to the first entity, wherein transitioning further comprises transitioning the second public key (e2) from the short encryption key to a long encryption key having a length that is greater than or equal to 2048 bits.

In some embodiments, the second primary information (sp) comprises operational information associated with the second entity, wherein the operational information comprises at least one of internal system information, monetizable operational information, control commands, or security protocols and procedures.

In some embodiments, the second supplementary information (ss) comprises status information associated with the second entity, wherein the status information comprises at least one of positional information, functional state, or captured sensor information.

In some embodiments, the first entity is further configured to: continuously monitor a presence of one or more entities within the immediate vicinity of the first entity; detect that the second entity is no longer within the immediate vicinity of the second entity; and terminate the established communication with the second entity.

In some embodiments, the first entity is further configured to: detect a presence of a third entity in the immediate vicinity of the first entity based on the monitoring; and transmit a third communication request to the third entity to establish a communication with the third entity.

In another aspect, a method for secure quandle-based cryptography in dynamic network environments is presented. The method comprising: receiving, from a first entity, a first communication request to establish a communication with the second entity; encrypting, by the second entity, using a quandle-based cryptography framework, second primary information (sp) associated with a second entity using a second public key (e2) in response to the first communication request; and transmitting, by the second entity, the encrypted second primary information (esp) and second supplementary information (ss) associated with the second entity to the first entity, wherein the first communication request is received in response to detecting a presence of the second entity in an immediate vicinity of the first entity.

Systems, computer program products, and methods are described for secure quandle-based cryptography in dynamic network environments. An example system may include a plurality of entities, wherein a first entity is configured to detect a presence of a second entity in an immediate vicinity and transmit a first communication request to the second entity. The second entity, upon receiving the first communication request, may encrypt primary information associated with the second entity using a quandle-based cryptography framework. The encrypted second primary information, along with second supplementary information, may then be transmitted to the first entity as a response to the communication request.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIG. 1 illustrates an example network environment, in accordance with an embodiment of the disclosure;
FIG. 2 illustrates an example autonomous vehicle circuitry, some or all of which may be included in an autonomous vehicle, in accordance with an embodiment of the invention;
FIG. 3 illustrates a schematic diagram of example circuitry, some or all of which may be included in a computing unit of an autonomous vehicle, in accordance with an embodiment of the disclosure; and
FIG. 4 illustrates an example method for direct authentication between two entities in a dynamic network environment, in accordance with an embodiment of the disclosure.

### DETAILED DESCRIPTION

### Overview

In the realm of dynamic, ad-hoc, or temporary networks, secure communication between unknown or temporarily connected participants presents significant challenges. These networks often emerge in scenarios such as disaster response operations, ad-hoc communications, or temporary sensor networks involving autonomous vehicles and drones. In such settings, the transient and decentralized nature of the network demands secure encryption methods that ensure data integrity and security without prior knowledge of the participating entities.

Embodiments of the invention embrace a quandle-based cryptography to achieve secure communication in dynamic, ad-hoc, or temporary networks. Quandle-based cryptography leverages the unique properties of quandle and rack axioms to improve cryptographic security. Unlike conventional cryptographic algorithms that depend on associative operations, the non-associative nature of quandle operations introduces an additional layer of complexity, strengthening the cryptographic process. In dynamic, ad-hoc, or temporary networks, quandle-based cryptography may be used to facilitate secure communication. Furthermore, quandle-based cryptography allows for the flexibility in adjusting security levels by controlling the length of the encryption keys and encoding variables. Such flexibility allows a high degree of freedom to balance between key length and the desired strength of security.

An example system may create a secure platform for information exchange where entity identification is protected by encryption keys. For instance, in a disaster response scenario, various first responders can communicate and share critical information without unauthorized access to their identities or data beyond the intended ad-hoc communication. The example system may use quandle-based cryptography to protect primary information associated with each entity. For instance, each drone or autonomous vehicle in the network may use a unique encryption key to secure its sensor data. Secondary information, such as status updates, can be shared, ensuring that primary data remains isolated and protected from unauthorized access. Furthermore, the example system may employ short public keys and low encryption levels for initial handshakes (e.g., initial communication links), which accelerates the process of establishing secure connections. For example, when drones first connect to a temporary network set up at a disaster site, they use short public keys for quick authentication. Once a secure communication link is established, the system may transition to higher encryption levels with longer private keys for ongoing data transfer, ensuring robust security during continued operations. In this way, the example system may allow different entities to utilize the same temporary network infrastructure without risking data exposure to each other. In a temporary communication network, multiple entities can share the same network without compromising the confidentiality of their communications. Each entity's data remains encrypted and isolated, promoting secure and efficient communication in dynamic environments. The example system may also enable secure data sharing among various entities, such as autonomous vehicles and drones, which may belong to different owners, such as vendors. For instance, in a smart city scenario, autonomous delivery vehicles from different owners can share traffic data without exposing their proprietary information, optimizing performance and communication. In specific applications, the example system may support the sharing of sensor information, threat detection data, current direction and speed, and other relevant data. For example, in a fleet of autonomous vehicles, the system can facilitate the sharing of threat detection information and current speed among vehicles to enhance safety and efficiency. Additionally, it enables cooperative measures, such as windbreaking, to achieve energy savings.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

Furthermore, as would be evident to one of ordinary skill in the art in light of the present disclosure, the terms "substantially" and "approximately" indicate that the referenced element or associated description is accurate to within applicable engineering tolerances.

### Quandle-based Cryptographic Framework

Knot theory, a branch of topology, focuses on the study of knots and their properties, specifically how knots can be distinguished, categorized, and transformed into one another through continuous deformations without cutting or joining ends. This theoretical framework may be used to provide a concrete mathematical basis for developing cryptographic methods that are inherently resistant to known quantum computing threats. The application of knot theory to cryptography leverages the concept that knots and their transformations can represent data, encryption processes, and cryptographic keys. The invariants in knot theory (such as the Jones polynomial), which are properties that remain unchanged under knot deformation, offer a way to encode and secure information. These invariants can serve as the basis for cryptographic algorithms, where the complexity and difficulty of analyzing knot transformations provide security against unauthorized decryption. A tightly connected concept is that of a braid, which consists of a set of strands that may intertwine with each other vertically but do not intersect or overlap when viewed from above. Any knot can be represented as a closed braid, where the closure involves connecting the corresponding upper and lower ends of a braid without introducing new crossings. This operation transforms an open braid into a closed loop, or knot, preserving the topological features encoded in the braid structure.

The principle that two knots are equivalent if one can be transformed into the other through continuous deformation without cutting or stitching supports the security model of this cryptographic approach and can aid in traversing a noisy communication channel without losing the encoded information. In this context, the process of encryption can be conceptualized as the "knotting" of data, where the data is entangled in a complex knot structure. Decryption, conversely, involves "unknotting" the data, a process that requires knowledge of specific transformations, analogous to possessing the cryptographic key. The challenge of determining whether two knots are equivalent, particularly as knots increase in complexity, illustrates the difficulty of breaking the cryptographic scheme without the correct key. This highly complex task provides a significant barrier to both classical and quantum computational attacks.

The Reidmeister moves form the basis for determining when two knot diagrams represent the same knot, or in other words, when two knots are equivalent. The Type I move (twist and untwist) adds or removes a twist in the knot diagram. It involves creating or eliminating a single loop, effectively changing the local twisting of the strand. Despite its simplicity, the Type I move is powerful in demonstrating how a single twist does not change the essential properties of a knot. The Type II move (poke) involves two strands of the knot passing twice over or under each other. It can either introduce or remove a pair of crossings such that the strands remain unbroken and the overall topology of the knot is preserved. This move is particularly useful in illustrating how the interaction between different parts of the knot can be altered without affecting its fundamental characteristics. The Type III move (slide) involves sliding one strand over a crossing of two other strands. The Type III move does not change the number of crossings but alters the position of the strands around the crossings. The Type III move demonstrates the flexibility of knots in three-dimensional space, showing that the global structure of a knot can be preserved even as parts of it are rearranged. In the context of cryptography, the idea of knot equivalence through Reidemeister moves offers a metaphor for the encryption and decryption process. Just as a knot can be transformed through a series of moves without altering its essential characteristics, data can be encrypted into a complex form and later decrypted back to its original state, provided the correct sequence of transformations (analogous to the cryptographic key) is known.

Quandles are sets with binary operations satisfying axioms analogous to the Reidemeister moves used to manipulate knot diagrams. Embodiments of the invention contemplate an encryption framework employing the algebraic structure of quandles or racks to ensure secure, reversible encryption processes that allow for complex data manipulations while maintaining the integrity of the encrypted message. The axioms of quandles and racks facilitate the framework for encryption that mirrors operations on a message (plaintext) in the encrypted domain. Specifically, idempotency (quandle-specific) ensures that the encryption of a message using the same message as the encoding variable results in the message itself, a property that can be leveraged for consistency checks and to maintain structural patterns in encrypted data; invertibility allows for the reversible encryption process, ensuring that encrypted data (ciphertext) can be decrypted back to its original form (message) without loss of information, which is fundamental to any encryption scheme; self-distributivity enables complex manipulations of encrypted data that parallel operations on a message, allowing for certain computations to be performed directly on ciphertexts without revealing their contents. Self-distributivity allows for operations such as partially homomorphic encryption, where it is desirable to perform algebraic operations on encrypted data.

By exploiting quandle and rack axioms, the systems, methods, and computer program products described herein facilitate operations on ciphertexts similar to those performed on messages, without compromising confidentiality. Unlike conventional cryptographic algorithms that rely on associative operations (e.g., group operations), the non-associative nature of quandle operations adds a level of complexity to the cryptographic process. This way, the novel cryptographic framework proposed herein increases the level of security provided against conventional and sophisticated attacks, enabling secure data processing and transmission in digital environments. In the examples described herein, x ▷ y and c ◁ y are binary operations. Indeed, the two operations may be implemented in a number of ways, as long as these implementations satisfy the axioms of quandle and/or rack algebra. In one example embodiment, $x ▷ y = y {\left(\frac{x}{y}\right)}^{e}$ and $c ◁ y = y {\left(\frac{c}{y}\right)}^{f}$, where x may refer to the message to be transmitted, y may be an encoding variable (public or private, depending on the application), e may refer to public key, c may refer to the ciphertext, and f may refer to the private key. Unlike many other cryptographic frameworks, x, y, and c are rational numbers, rather than just integers. In the proposed encryption framework, the selection of variables, such as e and f, may draw parallels to the established methodologies employed in the Rivest-Shamir-Adleman (RSA) algorithm, particularly in the choice and mathematical properties of specific parameters. Specifically, e may be chosen such that 1 < e < ϕ(n) and e is coprime to ϕ(n), meaning that e and ϕ(n) share no common divisors other than 1. This ensures that e has a multiplicative inverse modulo ϕ(n). f may be calculated as the multiplicative inverse of e modulo ϕ(n). This means f is the number that satisfies the equation e · f = 1 mod ϕ(n). In other words, f is chosen such that the product of f and e, divided by ϕ(n), leaves a remainder of 1. Here, n is the product of two (often large) prime numbers p and q, and ϕ(n) is Euler's totient function defined as ϕ(n) = ϕ(p · q) = (p - 1) · (q - 1). Similar to the RSA algorithm, the Carmichael's totient function may be used instead of Euler's totient function for same or similar purposes.

Furthermore, x *▷* y and c ◁ y may be complementary (in accordance with the above invertibility property), ensuring a symmetrical relationship that supports their cryptographic utility. Specifically, while x ▷ y is used to encrypt the message (x), i.e., to generate the ciphertext (c), while c ◁ y is used in decryption to retrieve the message (x) from the ciphertext (c). In conventional cryptographic algorithms, such as RSA, the message (x), is an integer. However, the proposed relationship between x *▷* y and c ◁ y allows x and y to also be non-integer, or rational number, which increases the complexity of the encryption. Compared to RSA, the proposed relationship not only allows the message (x), to be a rational number, but also includes an encoding variable (y), which is non-existent in RSA and can also be any integer or rational number. This further increases the complexity of the encryption, thus strengthening security by making unauthorized decryption significantly more difficult. Indeed, when x is an integer and y = 1, the resulting relationship aligns with the RSA algorithm, representing a specific instance of the proposed cryptographic framework. What is more, the complexity of the encryption can be further strengthened by introducing additional encoding variables, such as a second encoding variable (z) (or many such variables as described herein), to the existing relationship, x *▷* y. Specifically, while x *▷* y *▷* z is used to encrypt the message (x) to generate the ciphertext (c), c ◁ z ◁ y may be used in decryption to retrieve the previously encrypted message (x). Here, the second encoding variable (z) is first decoded, followed by the encoding variable (y), to then retrieve the message (x). Similar to x and y, z can also be an integer or a rational number, further increasing the complexity of the encryption. In addition to introducing encoding variables, the complexity of the encryption can be further strengthened by using multiple public key - private key pairs (e-f pairs) for each encoding variable introduced. As such, at a minimum, the complexity of the proposed encryption framework aligns with RSA, potentially extending it.

The subject matter disclosed in the prior application filed in Israel, entitled Quandle-based cryptographic Framework, Application No. 313045, filed on May 22, 2024, which focuses on the quandle-based cryptographic framework, is hereby incorporated by reference in its entirety as if fully set forth herein. This incorporation is intended to provide further details, features, and embodiments related to the encryption methods and systems discussed in the present disclosure, and any modifications or adaptations within the scope of that application are considered applicable to the present system and method.

### Example Network Environment

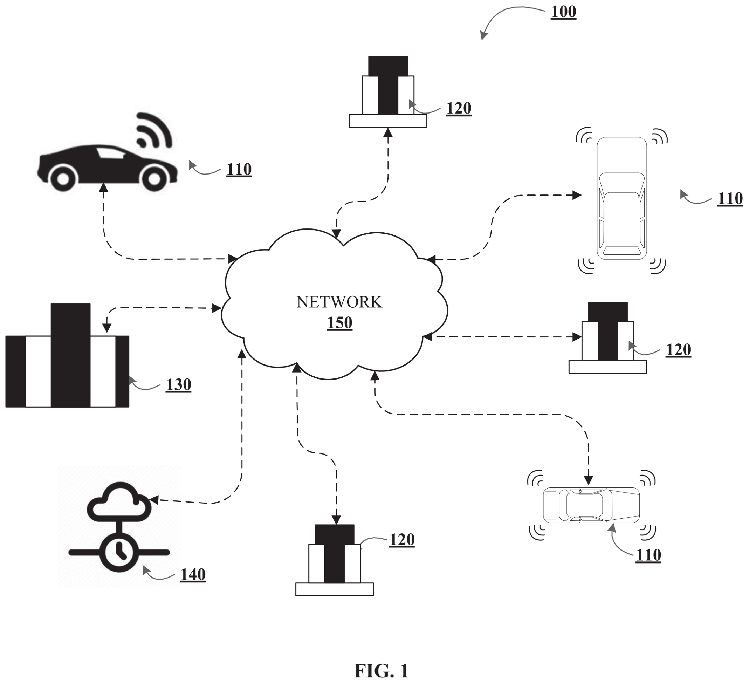

FIG. 1 illustrates an example network environment 100, in accordance with an embodiment of the disclosure. As shown in FIG. 1, the network environment 100 may include a plurality of autonomous vehicles 110, roadside units (RSUs) 120, a central management unit 130, one or more temporary nodes 140, such as drones or mobile command units, and a network 150.

The plurality of autonomous vehicles 110 may be equipped with onboard sensors, computing units, and communication modules to enable autonomous operation and interaction with other components in the network environment 100. The plurality of autonomous vehicles 110 may gather data from their surroundings using sensors such as cameras, light detection and ranging (LiDAR), radar, global positioning system (GPS), and ultrasonic sensors to detect obstacles, road conditions, and other relevant information. The onboard computing units may process this sensor data to perform tasks such as path planning, object detection, and decision-making. Autonomous vehicles 110 may be capable of vehicle-to-vehicle (V2V), vehicle-to-infrastructure (V2I), and vehicle-to-everything (V2X) communication using wireless communication protocols, such as Dedicated Short-Range Communications (DSRC), 5G New Radio (NR) V2X, or Wi-Fi-based V2X. This capability allows each autonomous vehicle to share data with other vehicles, RSUs 120, or the central management unit 130, facilitating coordinated driving, collision avoidance, and real-time traffic management.

RSUs 120 may be fixed communication devices positioned along roadways, at intersections, or in other strategic locations to facilitate data exchange between autonomous vehicles 110 and the central management unit 130. RSUs 120 may function as data collection points that receive information from passing vehicles, such as traffic density, detected hazards, or environmental conditions, and relay it to the central management unit 130 for further processing. RSUs 120 may also transmit information back to vehicles 110, such as traffic signal status, roadwork notifications, or dynamic speed limits, enabling vehicles to make informed navigation decisions. RSUs 120 may be equipped with communication modules compatible with multiple protocols (e.g., DSRC, Wi-Fi, 5G) to support various V2I and I2V applications.

The central management unit 130 may serve as a data aggregation and coordination hub within the network environment 100. The central management unit 130 may collect data from RSUs 120, autonomous vehicles 110, and other network nodes to perform tasks such as traffic analysis, congestion management, and navigation optimization. By processing the aggregated data, the central management unit 130 may generate instructions or recommendations that are sent back to vehicles 110 or RSUs 120, such as rerouting suggestions, coordinated maneuver commands, or traffic signal adjustments. The central management unit 130 may also integrate data from external sources, such as weather stations, public transit systems, or emergency services, to improve decision-making and adapt traffic management strategies to changing conditions.

The network environment 100 may include one or more temporary nodes 140, such as drones or mobile command units, which may provide additional communication coverage or specialized functions when needed. Temporary nodes 140 may be deployed to extend the network range in areas with limited fixed infrastructure, such as rural or remote locations. Temporary nodes 140 may also be used during events that require temporary communication setups, such as emergency responses, large public gatherings, or road construction. Drones, for instance, may collect aerial data on traffic conditions or road incidents and relay this information to the central management unit 130 or nearby vehicles 110. Mobile command units may function as temporary RSUs, facilitating communication and data exchange in areas where permanent infrastructure is unavailable or compromised.

The network 150 may serve as the central communication backbone within the network environment 100, facilitating data exchange and coordination among the various components, including the plurality of autonomous vehicles 110, roadside units (RSUs) 120, the central management unit 130, and temporary nodes 140. The network 150 may be composed of a combination of wired and wireless communication links that support different protocols, such as DSRC, C-V2X, Wi-Fi-based V2X, and other relevant technologies. These communication links may allow for various data transmission modes, including unicast, multicast, and broadcast, to accommodate the diverse communication needs of the network environment. The network 150 may dynamically manage bandwidth allocation, prioritize data based on urgency (e.g., safety-critical information), and ensure secure data transfer using encryption and authentication measures. By integrating all components through the network 150, the system can facilitate coordinated driving, real-time traffic management, and adaptive responses to changing conditions.

Various components in the network environment 100, such as the plurality of autonomous vehicles 110, RSUs 120, a central management unit 130, and/or the temporary nodes 140 may interact in various configurations, using the network 150, to support the communication and coordination required for autonomous vehicle operation. For instance, the plurality of autonomous vehicles 110 may continuously exchange data with each other and with nearby RSUs 120 to share information on road conditions, traffic events, or navigational updates. RSUs 120 may be positioned at fixed locations along roadways to collect data from vehicles 110 and relay it to other network elements, including the central management unit 130. The central management unit 130 may aggregate data from multiple RSUs 120 and vehicles 110, providing centralized processing or coordination to optimize traffic flow or manage network resources. Temporary nodes 140, such as drones or mobile command units, may join the network to extend communication coverage, collect additional data, or provide temporary connectivity in areas where fixed infrastructure is limited or unavailable.

The network environment 100 may operate under various configurations, including decentralized, centralized, or hybrid networks, each of which supports different communication and coordination needs for autonomous vehicles.

In a decentralized or ad-hoc configuration, autonomous vehicles 110 may communicate, via the network 150, directly with each other without relying on fixed infrastructure or centralized control. Decentralized or ad-hoc configuration may be suited for scenarios where vehicles need to quickly form temporary networks to share data, such as positional information, speed, sensor readings, or imminent hazards. Decentralized or ad-hoc networks may be useful in areas with limited infrastructure, such as rural regions, or in dynamic environments, such as disaster zones, where fixed communication infrastructure may be unavailable or compromised. In such configurations, the autonomous vehicles 110 may employ peer-to-peer communication protocols to establish connections and maintain network integrity. Each vehicle may act as a node that can relay data to nearby vehicles, thereby enabling multi-hop communication to extend the network's effective range.

In a decentralized or ad-hoc configuration, the network environment 100 may support communication links that allow vehicle-to-vehicle (V2V) communication, where data may be transmitted directly between vehicles to facilitate information sharing and coordination. In specific embodiments, V2V communication may occur over wireless channels using short-range communication protocols, such as DSRC, 5G NR V2X, or Wi-Fi-based V2X, allowing vehicles 110 to transmit data packets directly without relying on intermediate infrastructure, such as RSUs 120 or a central management unit 130. DSRC may operate in the 5.9 GHz frequency band and support low-latency communication, making it well-suited for exchanging time-sensitive information, such as collision warnings, emergency braking notifications, or lane-change alerts. DSRC may allow vehicles 110 to communicate directly with each other within a range of approximately 300 to 1,000 meters, depending on environmental conditions. 5G NR V2X may provide enhanced capabilities compared to traditional DSRC by leveraging cellular networks for both direct vehicle-to-vehicle communication and network-assisted communication through cellular base stations. The 5G NR V2X protocol may offer higher data throughput, improved reliability, and lower latency, allowing vehicles 110 to share more complex data, such as high-definition sensor maps or video feeds from onboard cameras. Additionally, 5G NR V2X may extend the communication range beyond that of DSRC by utilizing network infrastructure for long-range data transmission, which may be useful for coordinating maneuvers over longer distances or when vehicles are not in direct line-of-sight. Wi-Fi-based V2X (IEEE 802.11p) may also enable short-range communication between vehicles 110, typically within a range of 100 to 300 meters. In some embodiments, V2V communication may involve the use of multi-channel operation, where different data types are transmitted on separate channels to avoid interference. For example, safety-critical messages may be sent on a high-priority channel, while non-critical information, such as status updates or infotainment data, may use a separate channel. As such, these communication protocols may be implemented in a flexible manner, allowing vehicles 110 to switch between them based on factors such as network availability, signal strength, or communication range requirements. For instance, vehicles may utilize DSRC for short-range communication in low-coverage areas and switch to 5G NR V2X when moving into regions with robust cellular network support.

The information exchanged through V2V communication may include various types of data, such as positional coordinates, speed, acceleration, braking status, trajectory predictions, and sensor data indicating road conditions, obstacles, or traffic density. Such information may be used by autonomous vehicles 110 to perform functions such as collision avoidance, lane merging, adaptive cruise control, and coordinated maneuvers like platooning. In addition, V2V communication may support the sharing of situational awareness data, enabling vehicles to warn each other of sudden braking events, road hazards, or changes in driving conditions (e.g., slippery surfaces or debris). To establish and maintain V2V communication, autonomous vehicles 110 may employ protocols that support ad-hoc network formation, allowing vehicles to join or leave the network dynamically as they enter or exit the communication range. These protocols may include mechanisms for message prioritization, data validation, and error correction to ensure that critical information is transmitted reliably and in a timely manner. For example, safety-related messages may be given higher transmission priority than non-critical information, such as status updates.

In some embodiments, V2V communication may enable multi-hop message relaying, where a vehicle 110 receives data from another vehicle and forwards it to additional vehicles beyond its direct communication range. This multi-hop relaying may extend the effective communication range of the network and ensure that information can be disseminated across a larger area, allowing vehicles to coordinate over long distances, such as on highways or during emergency evacuations. Furthermore, V2V communication may support data aggregation and fusion, where information from multiple vehicles is combined to create a more comprehensive picture of the driving environment. For example, data from the sensors of different vehicles may be aggregated to detect patterns or trends, such as traffic flow changes, emerging hazards, or road anomalies. The aggregated data may then be used to inform driving strategies or shared with other vehicles within the network environment 100 to improve overall safety and efficiency. In addition, V2V communication may incorporate encryption and authentication measures to ensure data security and integrity. Each vehicle 110 may use digital certificates or cryptographic keys to verify the authenticity of transmitted messages, preventing unauthorized entities from injecting false information into the network.

In a centralized configuration, a central management unit 130 may facilitate communication and manage the flow of data within the network environment 100 via the network 150. The central management unit 130 may collect data from multiple nodes, including vehicles 110 and RSUs 120, and then redistribute relevant information based on predefined rules or algorithms. Centralized configuration may be optimal in urban environments or smart city applications, where the central management unit 130 can optimize traffic flow, manage congestion, and dynamically update navigation routes based on real-time data. The central management unit 130 may also control network resources, such as bandwidth allocation or communication priorities, to coordinate secure data transmission. Additionally, in a centralized setup, RSUs 120 may serve as data collection points that transmit data back to the central management unit 130, which can process the data to make network-wide decisions, such as adjusting traffic signal timings or sending alerts about upcoming road hazards.

The centralized configuration may support various communication links, including vehicle-to-infrastructure (V2I) and infrastructure-to-vehicle (I2V) communication, where data may be exchanged between vehicles 110 and RSUs 120 or the central management unit 130. V2I communication may involve vehicles 110 transmitting data, such as their current location, speed, or detected road conditions, to nearby RSUs 120, which may then relay this information to the central management unit 130 for processing. I2V communication may occur when the central management unit 130 or RSUs 120 send data back to the vehicles 110, providing updates or instructions based on the analysis of aggregated information from the network. For instance, I2V communication may be used to inform vehicles 110 about upcoming traffic congestion, recommended detours, or dynamic speed limits.

In specific embodiments, V2I and/or I2V communication may occur over wireless channels using Dedicated Short-Range Communications (DSRC), Cellular V2X (C-V2X), or Wi-Fi-based V2X (IEEE 802.11p) protocols. These communication protocols may support low-latency, high-reliability data transmission between vehicles and infrastructure components, enabling real-time updates and responsive traffic management. DSRC may provide short-range communication capabilities for immediate data exchange with nearby RSUs 120, while C-V2X may leverage cellular networks to extend the range of communication and facilitate data transmission through cellular base stations to the central management unit 130. Wi-Fi-based V2X (IEEE 802.11p) may be used for short-range communication scenarios, particularly in environments with dense RSU deployment. In some cases, additional communication protocols, such as Bluetooth, Radio-Frequency Identification (RFID), or satellite communication, may be used for specific V2I and I2V applications. For example, Bluetooth may facilitate short-range data exchange in parking areas, while satellite communication may be employed for remote monitoring in areas lacking traditional V2X infrastructure. These protocols may be selected based on factors such as communication range, data rate requirements, and environmental conditions to optimize the performance of the network environment 100.

To facilitate data exchange in the centralized configuration, the central management unit 130 may implement protocols for managing data flow between various network nodes. This may include prioritizing certain types of data, such as safety-critical information or real-time navigation updates, over less urgent data like vehicle status reports. The central management unit 130 may dynamically allocate bandwidth or adjust communication parameters to ensure efficient and reliable transmission of high-priority data. In addition, RSUs 120 may function as intermediaries that pre-process data before sending it to the central management unit 130, such as filtering out redundant information or aggregating data from multiple vehicles to reduce network load.

The centralized configuration may also support coordination of automated driving functions across multiple vehicles 110, allowing the central management unit 130 to facilitate cooperative maneuvers, such as synchronized lane changes or adaptive platooning, where groups of vehicles maintain optimal spacing and speed. For example, the central management unit 130 may use data received from vehicles 110 to calculate optimal trajectories for a set of vehicles approaching an intersection, then send coordinated instructions to each vehicle to ensure smooth traffic flow. In some embodiments, the central management unit 130 may integrate data from external sources, such as weather stations, emergency services, or public transit systems, to further enhance the decision-making process. The additional information may be used to adjust traffic management strategies in response to changing conditions, such as rerouting vehicles 110 during severe weather or prioritizing emergency vehicles. The central management unit 130 may continuously update its algorithms based on real-time data, enabling adaptive control of the network environment 100.

Security measures in a centralized configuration may include encryption, access control, and data integrity checks to ensure that data exchanged between vehicles 110, RSUs 120, and the central management unit 130 is secure and protected against unauthorized access. The central management unit 130 may manage digital certificates or cryptographic keys for network participants, verifying the authenticity of data before processing it. The centralized configuration may enable long-term data analysis by storing aggregated data collected from vehicles 110 and RSUs 120 in a centralized database. The stored data may be used for historical analysis, such as identifying patterns in traffic flow, planning infrastructure improvements, or training machine learning models for predictive maintenance or autonomous driving algorithms.

A hybrid configuration may combine aspects of both decentralized and centralized networks, leveraging the advantages of direct V2V communication while also benefiting from centralized coordination. In this setup, vehicles 110 may communicate with each other directly to share time-sensitive information, such as collision warnings or changes in road conditions, while also receiving broader updates and instructions from the central management unit 130. The hybrid configuration allows for greater flexibility in managing communication and data flow, enabling the network to adapt to varying conditions. For example, when the central management unit 130 is available, it may provide guidance and updates to vehicles based on aggregated data from RSUs 120 and other sources. However, if the central management unit 130 becomes unavailable, the network may still maintain a basic level of functionality through decentralized peer-to-peer communication among vehicles 110.

In each configuration, the network may support various methods for data exchange, such as broadcast, multicast, or unicast communication, depending on the needs of the vehicles and the network conditions. The configurations may be adjusted dynamically, allowing the network to switch between different modes of operation in response to changing environmental factors or operational requirements.

### Example Autonomous Vehicle Circuitry

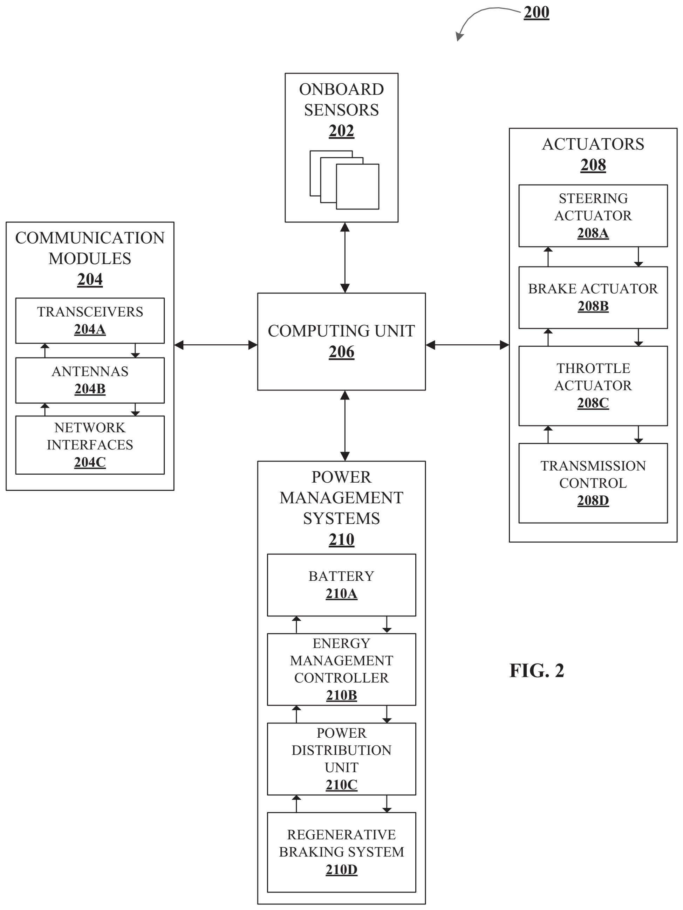

FIG. 2 illustrates an example autonomous vehicle circuitry 200, some or all of which may be included in an autonomous vehicle (e.g., autonomous vehicle 110), in accordance with an embodiment of the invention. As shown in FIG. 2, the autonomous vehicle may include onboard sensors 202, communication modules 204, computing units 206, actuators 208, and power management systems 210.

The onboard sensors 202 may be configured to detect and collect data from the vehicle's surroundings and internal systems to enable autonomous driving functions. These sensors 202 may include various types of detection and measurement devices, such as LiDAR sensors, radar sensors, cameras, GPS receivers, ultrasonic sensors, inertial measurement units (IMUs), and/or the like. LiDAR sensors may generate a detailed 3D map of the environment by emitting laser pulses and measuring the time of flight to detect reflected signals, which can help identify obstacles and road contours. Radar sensors may detect the speed and distance of surrounding objects, such as other vehicles and stationary structures, by emitting radio waves and analyzing the reflected signals. Cameras may capture visual data for recognizing traffic signals, lane markings, and road signs, while GPS receivers may provide positioning information for navigation. Ultrasonic sensors may be used for short-range detection, such as during parking, and IMUs may measure acceleration and angular velocity to help maintain vehicle stability.

The communication modules 204 may enable the autonomous vehicle to exchange data with external entities, including other vehicles, RSUs (e.g., RSUs 120), and central management units (e.g., central management unit 130). The communication modules 204 may support various V2X communication protocols, such as DSRC, Cellular V2X (C-V2X), Wi-Fi-based V2X (IEEE 802.11p), and/or the like. These protocols may facilitate V2V, V2I, and I2V communication to allow the vehicle to share information, such as positional data, sensor readings, or emergency alerts. The communication modules 204 may include transceivers 204A, antennas 204B, and network interfaces 204C to transmit and receive data over wireless channels. The transceivers 204A may handle signal modulation and demodulation, while the antennas 204B may be used to optimize signal strength and communication range. The network interfaces 204C may support seamless switching between different communication protocols based on factors such as network availability or application requirements. Additionally, the communication modules 204 may incorporate encryption and authentication mechanisms to ensure data security and integrity during transmissions, preventing unauthorized access or tampering.

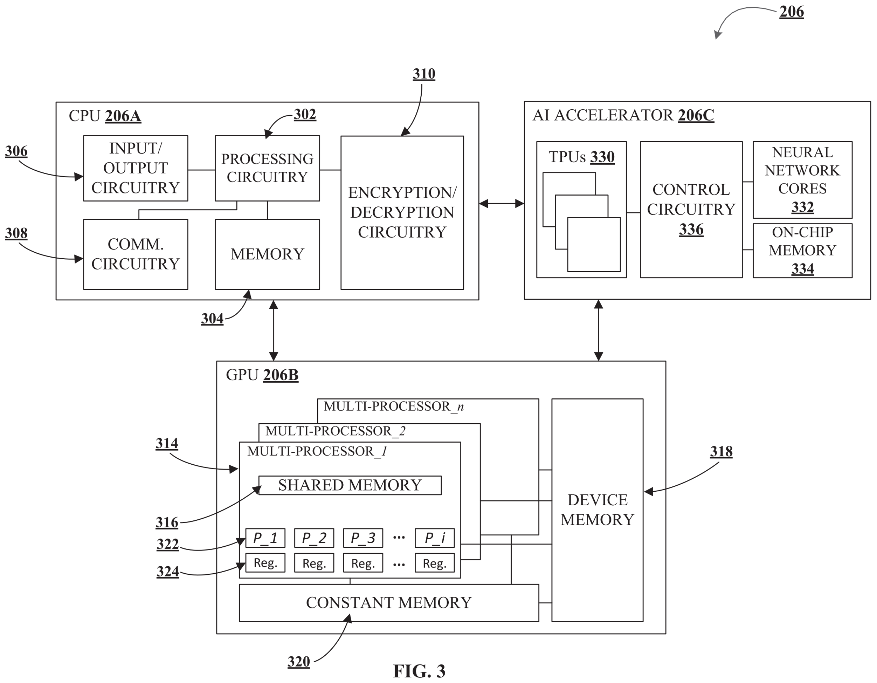

The computing units 206 may be responsible for processing the data collected by the onboard sensors 202 and communication modules 204, making driving decisions, and managing the operation of various vehicle systems. The computing units 206 may include a central processing unit (CPU), a graphics processing unit (GPU), and other components such as an artificial intelligence (AI) accelerator, data storage, and/or the like, as described in further detail in FIG. 3. The CPU may handle general computational tasks, including system management, network communication, and running control algorithms. The GPU may be utilized for parallel processing tasks, such as image recognition, sensor data fusion, and real-time rendering of the environment. The AI accelerator may be a dedicated hardware module optimized for deep learning and neural network inference, enabling the vehicle to perform tasks such as object detection, path planning, and predictive analytics with low latency. The computing units 206 may also include data storage components, such as solid-state drives (SSDs) for long-term storage of maps, software, and historical data, as well as random-access memory (RAM) for temporary data storage during processing tasks. These computing units 206 may work together to analyze sensor data in real-time, plan driving routes, and generate control commands for the vehicle's actuators 208. Additionally, the computing units 206 may be equipped with software modules for different functionalities, including perception, localization, motion planning, and control, allowing the autonomous vehicle to operate safely and efficiently in various driving scenarios.

The actuators 208 may be responsible for executing the control commands generated by the computing units 206, enabling the autonomous vehicle to perform physical actions necessary for driving. The actuators 208 may include components such as a steering actuator 208A, brake actuator 208B, throttle actuator 208C, transmission control 208D, and/or the like. The steering actuator 208A may control the direction of the vehicle by adjusting the angle of the steering mechanism based on the computed path. The brake actuator 208B may modulate the braking force applied to the wheels, allowing the vehicle to slow down or come to a complete stop as required. The throttle actuator 208C may control the acceleration of the vehicle by adjusting the throttle position, thereby managing the engine or motor power output. For vehicles equipped with an automatic transmission, the transmission control 208D may manage gear selection to optimize performance and efficiency. The actuators 208 may be connected to various sensors that provide feedback on the current state of the vehicle's motion, such as wheel speed sensors or position sensors, enabling closed-loop control. Such feedback allows the computing units 206 to adjust actuator commands in real-time for improved stability and responsiveness, ensuring that the vehicle maintains the desired trajectory and speed. Additionally, the actuators 208 may support advanced vehicle dynamics control systems, such as electronic stability control (ESC) or adaptive suspension, to enhance the safety and comfort of the autonomous vehicle.

The power management systems 210 may be responsible for supplying and regulating electrical power throughout the autonomous vehicle. The power management systems 210 may include components such as the battery 210A, energy management controller 210B, power distribution units 210C, regenerative braking system 210D, and/or the like. The battery 210A may serve as the primary source of electrical power for the vehicle, supplying energy to the propulsion system, onboard sensors 202, computing units 206, communication modules 204, and other auxiliary systems. The energy management controller 210B may monitor and optimize power usage across the vehicle's subsystems to maximize efficiency and extend driving range. The energy management controller 210B may dynamically allocate power to different components based on current requirements, such as increasing power to the computing units 206 during intensive data processing tasks or adjusting power levels to the actuators 208 during high-demand driving conditions. The power distribution units 210C may be responsible for delivering the appropriate voltage and current to each subsystem, ensuring stable operation under various conditions. The power distribution units 210C may also include safety features, such as circuit protection and emergency power shutoff mechanisms. The regenerative braking system 210D may capture kinetic energy during braking events and convert it into electrical energy to recharge the battery. In specific embodiments, the regenerative braking system 210D may be integrated with the brake actuator to provide smooth deceleration while maximizing energy recovery.

The power management systems 210 may also coordinate with external charging infrastructure, such as electric vehicle charging stations, to manage charging cycles and optimize battery health. In some embodiments, the power management system 210 may support vehicle-to-grid (V2G) communication, allowing the vehicle to interact with the power grid for functions such as load balancing or energy storage.

### Example Computing Unit Circuitry

FIG. 3 illustrates a schematic diagram of example circuitry, some or all of which may be included in a computing unit 206 of an autonomous vehicle (e.g., autonomous vehicle 110), in accordance with an embodiment of the disclosure. The computing unit 206 may include a CPU 206A, a GPU 206B, and an AI accelerator 206C. The CPU 206A may include components such as a processing circuitry 302, memory 304, input/output circuitry 306, communications circuitry 308, and encryption/decryption circuitry 310. The GPU 206B may include a plurality of multi-processors 314, a shared memory 316, a device memory 318, a plurality of processors *P_1, P_2, ..., P_i* 322 for each multi-processor 314, a plurality of registers 324 for each multi-processor 324, and a constant memory 320. The AI accelerator 206C may be configured to perform specialized computations for artificial intelligence tasks, such as deep learning and neural network inference. The AI accelerator 206C may include components such as a plurality of TPUs 330, neural network cores 332, on-chip memory 334, and control circuitry 336. The AI accelerator 206C may work in tandem with the GPU 206B and CPU 206A to perform real-time processing for tasks such as object detection, sensor fusion, and decision-making in autonomous driving. It should be understood that FIG. 3 is merely an illustrative embodiment, and the computing unit 206 may include more components, fewer components, or different components than those depicted. The arrangement of the components may also vary. Depending on specific implementation requirements, the computing unit 206 may incorporate additional components or omit certain components. For instance, the computing unit 206 may include a CPU that is operatively coupled to multiple GPUs and an AI accelerator, where the GPUs and AI accelerator are interconnected using high-speed interconnects such as NVLink^{®}, enabling efficient data sharing and parallel processing of AI tasks. Additionally or alternatively, the computing unit 206 may include multiple CPUs, AI accelerators, or GPUs that are interconnected via PCIe links, allowing for coordinated processing and workload distribution across the components. In some configurations, the CPUs, GPUs, and AI accelerator may be interconnected using a combination of PCIe, NVLink^{®}, or other high-speed interconnect technologies, facilitating seamless communication and data transfer among the processing units. The inclusion of the AI accelerator may improve the system's ability to perform complex machine learning and deep learning computations with low latency. Alternatively, the computing unit 206 may include only a CPU and an AI accelerator, depending on the specific processing requirements of the system.

In the computing unit 206, the CPU 206A may serve as the primary processing unit responsible for general-purpose computation and control operations associated with one or more functions described herein (e.g., executing encryption/decryption). For instance, the CPU 206A may execute instructions, manage data flow, and coordinate the activities of other components within the computing unit 206. The CPU 206A may include various circuitries, such as processing circuitry 302 for performing arithmetic and logical operations, memory 304 for storing data and instructions, input/output circuitry 306 for interfacing with external devices, communications circuitry 308 for handling data exchange with other systems or networks, and encryption/decryption circuitry 310 for performing cryptographic functions. As such, the CPU 206A may be configured to handle a wide range of workloads, including data processing, task scheduling, and control functions, enabling it to support various applications depending on the specific requirements of the computing unit 206.

Although the term "circuitry" as used herein is described in some cases using functional language, it should be understood that the particular implementations necessarily include the use of particular hardware configured to perform the functions associated with the respective circuitry as described herein. It should also be understood that certain components may include similar or common hardware. For example, two sets of circuitries may both leverage use of the same processing circuitry, communication circuitry, memory, or the like to perform their associated functions, such that duplicate hardware is not required for each set of circuitries. It will be understood in this regard that some of the components described in connection with the system 400 may be housed together, while other components are housed separately. While the term "circuitry" should be understood broadly to include hardware, in some embodiments, the term "circuitry" may also include software for configuring the hardware. In some embodiments, other elements of the computing unit 206 may provide or supplement the functionality of particular circuitry. For example, the processing circuitry 302 may provide processing functionality, the memory 404 may provide storage functionality, the communications circuitry 408 may provide network interface functionality, and the like.

The processing circuitry 302 may be embodied in a number of different ways and may, for example, include one or more processing circuitries configured to perform independently. Additionally, or alternatively, the processing circuitry 302 may include one or more processors configured in tandem via a bus to enable independent execution of instructions, pipelining, and/or multithreading. The processing circuitry 302 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 3 as a single processor, in some embodiments, the processing circuitry 302 may include a plurality of processors. The plurality of processors may be embodied on a single computing device or may be distributed across a plurality of computing devices configured to function collectively. The plurality of processors may be in operative communication with each other and may be collectively configured to perform one or more functionalities of the system 400 as described herein.

In an example embodiment, the processing circuitry 302 may be configured to execute instructions stored in the memory 304 or otherwise accessible to the processing circuitry 302. Alternatively, or additionally, the processing circuitry 302 may be configured to execute hard-coded functionality. As such, whether configured by hardware or software methods, or by a combination thereof, the processing circuitry 302 may represent an entity (e.g., physically embodied in circuitry) capable of performing operations according to an embodiment of the present disclosure while configured accordingly. Alternatively, as another example, when the processing circuitry 302 is embodied as an executor of software instructions, the instructions may specifically configure the processing circuitry 302 to perform one or more algorithms and/or operations described herein when the instructions are executed. For example, these instructions, when executed by the processing circuitry 302, may cause the computing unit 206 to perform one or more of the functionalities thereof as described herein.

The memory 304 may be non-transitory and may include, for example, one or more volatile and/or non-volatile memories, or some combination thereof. In other words, for example, the memory 304 may be an electronic storage device (e.g., a non-transitory computer readable storage medium). The memory 304 may be configured to store information, data, content, applications, instructions, or the like, for enabling an apparatus, e.g., the computing unit 206, to carry out various functions in accordance with example embodiments of the present disclosure. Although illustrated in FIG. 3 as a single memory, the memory 404 may comprise a plurality of memory components. The plurality of memory components may be embodied on a single computing device or distributed across a plurality of computing devices. In various embodiments, the memory 304 may comprise, for example, a hard disk, random access memory (RAM), virtual memory, non-volatile memory (NVRAM), cache memory, flash memory, a compact disc read only memory (CD-ROM), digital versatile disc read only memory (DVD-ROM), an optical disc, circuitry configured to store information, or some combination thereof. The memory 304 may be configured to store information, data, applications, instructions, or the like for enabling the computing unit 206 to carry out various functions in accordance with example embodiments discussed herein. For example, in at least some embodiments, the memory 304 may be configured to buffer data for processing by the processing circuitry 302. Additionally, or alternatively, in at least some embodiments, the memory 304 may be configured to store program instructions for execution by the processing circuitry 302. The memory 404 may store information in the form of static and/or dynamic information. This stored information may be stored and/or used by the computing unit 206 during the course of performing its functionalities.

In some embodiments, the processing device 302 further includes input/output circuitry 306 that may, in turn, be in communication with the processing circuitry 302 to provide an audible, visual, mechanical, or other output and/or, in some embodiments, to receive an indication of an input from a user or another source. In that sense, the input/output circuitry 306 may include means for performing analog-to-digital and/or digital-to-analog data conversions. The input/output circuitry 306 may include support, for example, for a display, touchscreen, keyboard, mouse, image capturing device (e.g., a camera), microphone, and/or other input/output mechanisms. The input/output circuitry 306 may include a user interface and may include a web user interface, a mobile application, a kiosk, or the like. The input/output circuitry 306 may interface with one or more units, devices, sensors, actuators, communication modules, storage devices, external processing units, peripheral devices, and/or the like. These outputs may then be transmitted to one or more destinations, such as display units, storage systems, control systems, processors (e.g., processing circuitry 302), network interfaces, peripheral devices, external systems, and/or the like, for further action.

In some embodiments, the input/output circuitry 306, in combination with one or more components described herein (e.g., processing circuitry 302) may be configured to control one or more functions of a display or one or more user interface elements through computer-program instructions (e.g., software and/or firmware) stored on a memory accessible to the processing circuitry 302 (e.g., the memory 304, and/or the like). In some embodiments, aspects of input/output circuitry 306 may be reduced as compared to embodiments where the computing unit 206 may be implemented as an end-user machine or other type of device designed for complex user interactions. In some embodiments (like other components discussed herein), the input/output circuitry 306 may be eliminated from the computing unit 206. Although more than one input/output circuitry can be included in the computing unit 206, only one is shown in FIG. 3 to avoid overcomplicating the disclosure (e.g., as with the other components discussed herein).

The communications circuitry 308, in some embodiments, includes any means, such as a device or circuitry embodied in either hardware, software, firmware or a combination of hardware, software, and/or firmware, that is configured to receive and/or transmit data from/to a network and/or any other device, or circuitry associated therewith. In this regard, the communications circuitry 308 may include, for example, a network interface for enabling communications with a wired or wireless communication network. For example, in some embodiments, communications circuitry 308 may be configured to receive and/or transmit any data that may be stored by the memory 304 using any protocol that may be used for communications between computing devices. For example, the communications circuitry 308 may include one or more network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 308 may include circuitry for interacting with the antenna(s) to cause transmission of signals via the antenna(e) or to handle receipt of signals received via the antenna(e). These signals may be transmitted by the computing unit 206 using various wireless communication technologies suitable for autonomous vehicles. These may include Bluetooth^{®} v1.0 through v5.0 or Bluetooth Low Energy (BLE) for short-range communication tasks, such as exchanging data with nearby devices (e.g., smartphones, in-car systems, or diagnostic tools). Ultra-Wideband (UWB) may be used for precise localization and short-range data transmission between vehicle components or with other nearby vehicles. Infrared wireless (e.g., IrDA) may be employed for specific short-range line-of-sight communication applications, such as vehicle identification in automated parking facilities. Additionally, these signals may be transmitted using Wi-Fi-based V2X protocols (e.g., IEEE 802.11p), which enable communication with roadside infrastructure, other vehicles, or network access points over short to medium distances. NFC may be utilized for proximity-based data transfer, such as vehicle access control or initiating secure communication links. C-V2X technology, including 4G LTE and 5G NR, may support longer-range communication for real-time data exchange with infrastructure, cloud services, or other vehicles, allowing for coordinated driving and traffic management. Other wireless technologies, such as Worldwide Interoperability for Microwave Access (WiMAX), may also be used for specific use cases where high data throughput or extended communication range is required, although these are less common in current vehicular applications. Each technology may be selected based on the specific communication needs, such as range, latency, or bandwidth, within the autonomous vehicle network.

The circuitries of the CPU 206A may be connected through various interconnect architectures, depending on their physical arrangement and implementation within the computing unit 206. Within the CPU 302, different circuitries such as the processing circuitry 302, memory 304, input/output circuitry 306, communications circuitry 308 may be linked through internal buses or interconnect fabrics that facilitate data transfer between these components. For example, the CPU 206A may use an internal crossbar switch or ring bus architecture to interconnect these circuitries, providing a pathway for data to move efficiently between the processing cores, cache memory, and other functional units. In some configurations, the CPU 206A may employ a hierarchical bus structure, where a front-side bus (FSB) connects the processing circuitry 302 to the memory 304, while a separate bus (e.g., a peripheral bus) connects the input/output circuitry 306, and communications circuitry 308. The internal interconnects may also be configured to support coherent memory access, ensuring that changes to data in one part of the CPU are reflected across other connected components.

Accordingly, non-transitory computer readable storage media, which may, for example, be the memory 304, can be configured to store firmware, one or more application programs, and/or other software, which include instructions and/or other computer-readable program code portions that can be executed to direct operation of the computing unit 206 to implement various operations, including the examples described herein. As such, a series of computer-readable program code portions may be embodied in one or more computer-program products and can be used, with a device, computing unit 206, database, and/or other programmable apparatus, to produce the machine-implemented processes discussed herein. It is also noted that all or some of the information discussed herein can be based on data that is received, generated and/or maintained by one or more components of the computing unit 206. In some embodiments, one or more external systems (such as a remote cloud computing and/or data storage system) may also be leveraged to provide at least some of the functionality discussed herein.

The GPU 206B in the computing unit 206 may serve as a specialized processing unit designed to handle parallel computational tasks. The GPU 206B may include various components to support its high-performance capabilities, such as a plurality of multi-processors 314, which may each comprise a set of individual processing units (P_1, P_2, ..., P_i) 422. Each multi-processor 314 may also include its own shared memory 316 to facilitate efficient data access and communication between the processors within the multi-processor. Additionally, the GPU 206B may include device memory 318, which serves as the primary storage for data processed by the GPU, and constant memory 320, which may be used to store read-only data that remains constant throughout the execution of specific tasks.

The multi-processors 314 may be configured to operate in parallel, allowing the GPU 206B to execute multiple threads simultaneously, thereby accelerating tasks that can be divided into smaller, concurrent operations. Each multi-processor 314 may include a set of registers 324 associated with its processors, which provide fast access to frequently used data during computation. The use of shared memory 316 within each multi-processor 314 may help reduce latency and improve throughput by allowing data to be quickly shared between threads without needing to access device memory 318.

The device memory 318 may serve as the main memory resource for the GPU 206B and may include various types of memory, such as GDDR (Graphics Double Data Rate) memory or high-bandwidth memory (HBM), depending on the performance requirements of the system. The device memory 318 may be used to store large datasets, textures, or other information needed for processing tasks, and may be accessible by both the GPU 206B and, in some configurations, the CPU 206A. The constant memory 320 may be used for data that does not change during processing, such as configuration parameters or lookup tables, which can be accessed quickly by the processors 322 without incurring additional latency.

The GPU 206B may support various interconnect architectures for communication between the multi-processors 314, shared memory 316, and other components within the computing unit 206. For instance, the GPU 206B may include an internal crossbar switch or ring interconnect that enables data flow between the multi-processors 314, shared memory 316, and device memory 318. In configurations where the GPU 206B is operatively coupled to one or more additional GPUs, high-speed interconnects such as NVLink may be used to facilitate data transfer and sharing of memory resources across multiple GPUs, thus enhancing parallel processing capabilities for large-scale computations.

In some embodiments, the CPU 206A and the GPU 206B may be operatively coupled through various interconnect architectures, depending on their physical arrangement and implementation within the computing unit 206. In embodiments where both the CPU 206A and GPU 206B are integrated onto the same SoC, their circuitries may communicate through high-speed interconnects designed for low latency and high bandwidth. In this configuration, the CPU 206A and GPU 206B can share a unified memory space, allowing them to access common data efficiently without the overhead associated with data transfer between separate components. In embodiments where the CPU 206A and GPU 206B are on different SoCs, their circuitries may connect via PCIe buses or similar high-speed interfaces, allowing for data exchange. In example embodiments of such a scenario, each SoC may have its own dedicated memory, and data may need to be transferred explicitly between the CPU's memory (e.g., memory 304) and the GPU's memory (e.g., device memory 318). Additionally, when CPU 206A and GPU 206B are housed within the same server but on separate motherboards, they may be connected through interconnects such as NVLink^{®} interconnects, which is designed for high-speed communication between CPU(s) and GPU(s), as described above. Such an approach may allow for greater bandwidth compared to traditional PCIe connections and enables faster data sharing, which is particularly beneficial for applications that demand rapid access to large datasets. Overall, the connectivity of the various circuitries within the computing unit 206 can take multiple forms depending on the design choices made during implementation. Each configuration offers different trade-offs in terms of performance, scalability, and complexity, and the chosen architecture may be optimized based on the specific workload requirements and performance goals of the system.

The computing unit 206 may be configured to support a wide range of operations across different domains, depending on the specific implementation requirements and the configuration of its components. For example, the computing unit 206 may be used to perform simulation operations, including but not limited to simulating physical processes, validating software for autonomous machines, conducting hardware testing, and/or the like. The computing unit's 206 capability to handle parallel processing tasks through the GPU 206B and general-purpose processing through the CPU 206A enables the computing unit 206 to efficiently execute simulations with high computational demands. Additionally, the computing unit 206 may facilitate digital twin operations, where real-world processes are mirrored digitally to monitor, optimize, or predict system behavior.

The AI accelerator 206C may be a specialized hardware component configured to execute artificial intelligence tasks, such as deep learning, neural network inference, and other machine learning computations, with high efficiency and low latency. The AI accelerator 206C may include a plurality of TPUs 330, neural network cores 332, on-chip memory 334, and control circuitry 336.

The TPUs 330 may be dedicated processing units optimized for performing tensor operations, which are frequently used in deep learning algorithms. These TPUs 330 may accelerate matrix multiplication and other linear algebra operations that form the core of many neural network computations, such as convolutional layers in image recognition tasks. The configuration of the TPUs may allow for parallel execution of multiple computations, increasing throughput and reducing processing time for large-scale AI models.

The neural network cores 332 may consist of specialized hardware modules configured to execute various neural network operations, such as convolutional, fully connected, pooling, and activation functions. These cores may be designed to handle the diverse types of layers and computations found in neural network architectures, making them versatile for different AI tasks, including object detection, natural language processing, and sensor fusion. The neural network cores 332 may work in conjunction with the TPUs 330 to optimize the execution of complex AI algorithms.

The on-chip memory 334 may be high-speed memory integrated within the AI accelerator 206C to store intermediate data, neural network weights, and frequently accessed variables during computation. The on-chip memory 334 may reduce latency by providing quick access to essential data, enabling real-time processing of AI tasks. The on-chip memory 334 may be organized in multiple levels, such as cache hierarchy, to ensure efficient data retrieval and minimize delays during execution.

The control circuitry 336 may manage the operation of the AI accelerator 206C by scheduling tasks, allocating resources, and coordinating data flow between the internal components. The control circuitry 336 may dynamically adjust processing priorities to optimize performance based on the workload, ensuring that tasks such as neural network inference or sensor fusion are executed with minimal delay. The control circuitry 336 may also interface with other parts of the computing unit 206 to synchronize the AI accelerator's operations with the overall system requirements.

The various components, including the TPUs, neural network cores, on-chip memory, and control circuitry, may be operatively interconnected using an interconnect fabric. The interconnect fabric may be configured to facilitate high-speed data transfer and efficient communication among the components, optimizing the execution of AI tasks. Examples of such interconnect fabrics include high-bandwidth memory interfaces, crossbar switches, and mesh networks, which provide low-latency communication pathways. In some embodiments, the interconnect fabric may utilize technologies such as NVIDIA's NVLink, which enables high-speed data exchange between processing units, allowing multiple AI accelerators to work together in parallel or to share data with other processors, such as GPUs or CPUs. The interconnect fabric may also support memory coherence protocols, ensuring that data stored in the on-chip memory 334remains consistent across different processing elements during computation.

In some embodiments, the computing unit 206 may include external data storage (not shown) to store large datasets, software, and historical information that are not immediately needed for real-time processing but are used for the autonomous vehicle's long-term operation. The external data storage may include components such as solid-state drives (SSDs), hard disk drives (HDDs), non-volatile memory, and/or the like, each serving different storage requirements. The SSD may provide high-speed access to data needed for tasks such as caching frequently accessed map data or software libraries, while the HDD may be used for long-term storage of less frequently accessed information, such as vehicle logs or sensor data archives. The external data storage may also store system data, including configuration files, firmware updates, and security credentials. Data interfaces within the external data storage may facilitate communication with the CPU 206A, GPU 206B, and AI accelerator 206C, allowing these components to retrieve and store data as needed. The data storage may also support encryption and access control mechanisms to protect the integrity and confidentiality of the stored information, especially when handling sensitive data related to the vehicle's operation or user privacy. Furthermore, the external data storage may enable data logging and analytics by storing raw sensor data collected during vehicle operation, which can be used for post-processing, training machine learning models, or system diagnostics.

It should be noted that the descriptions of the computing unit 206 and its components, as provided herein, represent just one embodiment of the invention. The specific configurations, arrangements, and functionalities described are illustrative and not intended to limit the scope of the invention. The computing unit 206 may include additional components, fewer components, or alternative components than those described, and the arrangement of the components may also vary depending on the specific implementation requirements. For example, the computing unit 206 may incorporate multiple GPUs, CPUs, or AI accelerators interconnected using various high-speed interconnect technologies, such as NVLink^{®} or PCIe, or may only include a subset of the described components. Furthermore, some functionalities may be implemented using different hardware, software, firmware, or combinations thereof. The embodiments described are provided for purposes of illustration and example, and various modifications, adaptations, and variations may be made without departing from the scope and spirit of the invention.

### Example Method for Direct Authentication between Two Entities in a Dynamic Network Environment

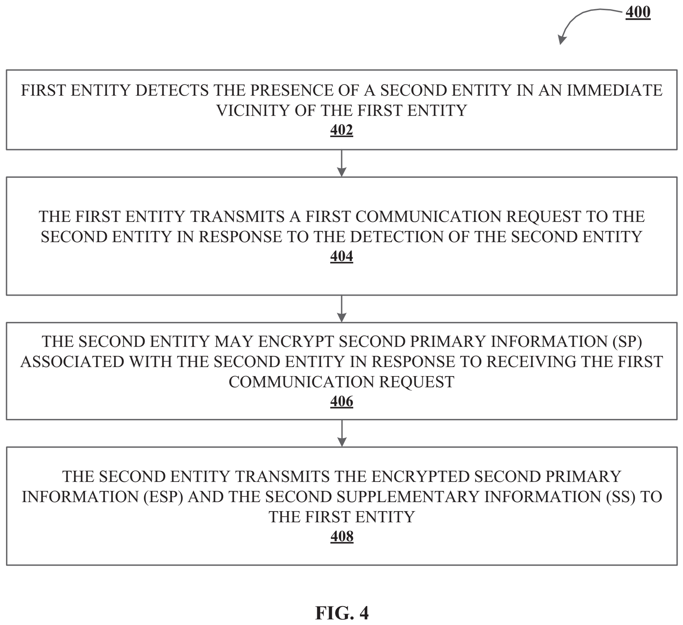

FIG. 4 illustrates an example method 400 for direct authentication between two entities in a dynamic network environment, in accordance with an embodiment of the disclosure.

An entity, as used herein, may refer to any device or system capable of participating in a dynamic network environment (e.g., network environment 100). The entity may be equipped with communication modules, sensors, processing units, or other components that enable it to detect nearby devices, exchange data, perform encryption and decryption operations, and connect to the network. Examples of entities may include, but are not limited to, autonomous vehicles (e.g., autonomous vehicle 110), drones, mobile computing devices, roadside units (e.g., RSU 120), central management units (e.g., central management unit 130), and various types of infrastructure components.

For instance, autonomous vehicles may act as entities by using their onboard systems to communicate securely with other vehicles, roadside infrastructure, or mobile command units. Drones may establish communication with central management units or other drones to share sensor data, flight information, or emergency alerts. RSUs may function as entities by facilitating data exchanges with passing vehicles or drones, providing information such as traffic signals or road hazards. Central management units may coordinate communication between different entities in the network, enabling secure data sharing and centralized control of network activities.

Entities may also include other types of connected devices, such as wearable sensors used by personnel in industrial or emergency response scenarios, mobile command units set up for temporary operations, or smart devices used in smart city applications. The ability of these various entities to detect the presence of a dynamic network, assess available communication channels, and initiate secure connections allows for participation in ad-hoc or temporary communication networks. This capability supports the secure transmission and coordination of data with other entities or network infrastructure components as needed.

The term "entity" is used broadly to encompass any device or system that can perform the described functions in a manner that facilitates secure communication within a dynamic network environment, where communication links may be established and terminated based on factors such as proximity, network conditions, or operational requirements. The entity may execute the steps described herein using its onboard systems and communication capabilities. Specifically, as described herein, the entity may be configured with processing units, communication modules, and encryption frameworks that enable it to perform tasks such as detecting nearby devices, sending and receiving communication requests, encrypting data, and transmitting encrypted information. The entity's onboard computing system (e.g., computing unit 206) may manage the process flow, executing each step in response to specific triggers or conditions detected within the network.

At block 402, the first entity may detect the presence of a second entity in an immediate vicinity of the first entity. This detection may occur through various techniques, such as proximity sensing, network discovery protocols, or direct wireless communication, which enable the first entity to identify nearby devices in the ad-hoc network. In example embodiments, each entity may have a defined connection radius within which it can detect the presence of other entities. The connection radius may represent an effective range of the entity's communication modules, such as wireless transceivers, proximity sensors, or other detection mechanisms. Whenever another entity comes within this connection radius, the first entity may identify its presence through various means, such as monitoring signal strength, analyzing unique network identifiers, or detecting transmitted signals. In some embodiments, the connection radius may be dynamic, adjusting based on factors such as network density, environmental conditions, or specific communication protocols in use. For instance, in high-density network areas, the connection radius may be reduced to minimize interference and optimize detection accuracy, whereas in open or rural environments, the radius may be extended to increase the range of detection. Additionally, the detection mechanism may involve periodic scanning or continuous monitoring to identify any entities entering or exiting the connection radius. In some cases, the detection process may include verification measures, such as checking digital certificates or comparing network credentials, to ensure that the detected entity is authorized for communication. Once the presence of the second entity is detected within the connection radius, the first entity may proceed to initiate secure communication.

At block 404, following the detection of the second entity, the first entity may transmit a first communication request to the second entity. As described herein, the detection of the second entity in the immediate vicinity of the first entity may trigger the initiation of a communication process, signaling that a second entity is within range and potentially available for secure data exchange. In some embodiments, the detection may involve the use of proximity sensors, network discovery protocols, or other techniques that identify the second entity's presence and initiate the request. The first communication request may serve as an indication that the first entity seeks to establish a secure communication channel with the second entity, allowing for the exchange of information.

The first entity may initiate the communication request to establish a secure exchange of information with the second entity for various reasons. For instance, the first entity may seek to obtain recent information regarding road conditions, traffic, weather, or other environmental factors that the second entity has encountered. Such information may be useful for adjusting the first entity's driving strategy, especially in scenarios where localized updates are not yet available from centralized sources. In some embodiments, the first entity may also transmit the request to coordinate driving maneuvers, such as merging lanes, executing platooning maneuvers, or navigating intersections. Establishing communication allows the first and second entities to share data, such as speed, acceleration, or trajectory information, to facilitate safe and efficient coordination.

In some cases, the first entity may send a communication request to alert the second entity about emergency conditions or hazards in the vicinity, such as accidents, road debris, or sudden changes in weather. The first entity may share positional data and relevant context to help the second entity make informed decisions about its driving strategy. Additionally, the communication request may be used to exchange diagnostic information about mechanical health, allowing the first entity to inquire if the second entity has experienced similar issues or to coordinate responses to shared problems.

The first communication request may include additional information to facilitate data exchange, such as the first entity's positional information, speed, or intended trajectory. This additional information may also be used by the second entity to determine the level of trust associated with the first entity. For example, the first entity may transmit authentication tokens, digital certificates, or other security parameters to verify its identity and establish the legitimacy of the communication request. In some embodiments, the first entity may include details about its operating status, fleet affiliation, or recent communication history to help the second entity assess the trustworthiness of the request. The first entity may also specify the type of data being requested or the priority level of the request, which could further inform the second entity's decision on the appropriate level of response and data sharing. In certain embodiments, the first entity may provide contextual information, such as recent observations of the environment or known hazards, to give the second entity additional context for the request and encourage the sharing of relevant data. This contextual information may serve as an indicator of the first entity's operational awareness and may influence the trust level assigned by the second entity.

At block 406, in response to receiving the first communication request, the second entity may encrypt second primary information (sp) associated with the second entity. In specific embodiments, prior to encrypting the second primary information (sp), the second entity may determine level of trust associated with the first entity. The trust level may be assessed based on various factors derived from the content of the communication request, such as the identity of the first entity, any provided authentication credentials, the urgency or priority of the request, and any history of prior interactions between the entities. For example, if the communication request includes authentication credentials, such as digital certificates or security tokens, the second entity may verify these credentials against a known list of trusted entities to determine if the requestor (e.g., first entity) is recognized and authorized. Additionally, the context or type of data being requested may influence the trust level; a high-priority request for emergency coordination may be treated with a higher trust level than a routine request for non-critical information.

The second entity may also take into account any past communication history with the first entity, or with any of the entities in the first set of entities that are associated with the same owner as the first entity, to further inform the assessment of trustworthiness. For example, if the second entity has previously communicated with other entities managed by the first owner and found those interactions to be reliable, this may positively influence the trust level assigned to the first entity. Conversely, if the second entity has encountered issues, such as data inconsistencies or failed authentication attempts, during prior interactions with other entities in the first set, it may result in a lower trust level for the first entity. By considering the communication history not only with the individual first entity but also with other related entities under the same ownership, the second entity can make a more comprehensive assessment of trustworthiness, leveraging a broader context of prior experiences to inform its decision-making process.

In specific embodiments, the trust level may be represented as a numerical value, probability score, or weighted factor that quantifies the degree of confidence the second entity has in the trustworthiness of the first entity. In some embodiments, the trust level may be calculated using a scoring system that takes into account various weighted factors derived from the communication request and other contextual information. The scoring system may assign numerical values to specific attributes, such as the validity of authentication credentials, the priority of the request, the nature of the requested data, and the history of previous interactions. These values may be combined using a weighted sum to produce an overall trust score for the first entity. For example, the trust level T may be calculated as follows: *T=w*1·*A + w*2*·P + w*3·*H + w*4·*C*, where: A represents the authentication score, based on the validity of credentials such as digital certificates or security tokens; P represents the priority score, based on the urgency or importance of the communication request; H represents the history score, based on the reliability of past interactions and communication with the first entity; C represents the contextual score, based on factors such as the type of data being requested or the first entity's operational status; and *w1, w2, w3,* and *w*4 are weighting factors that may be adjusted based on the particular requirements of the system, giving more or less importance to each attribute in determining the overall trust level.

In alternative embodiments, the trust level may be represented as a probability score, indicating the likelihood that the first entity is trusted based on known factors. For instance, Bayesian inference techniques may be employed to update the probability score based on new evidence provided by the communication request. If the first entity provides valid authentication credentials, the probability of trust may be increased, whereas if the request lacks certain information or indicates unusual behavior, the probability may be decreased. In other embodiments, a fuzzy logic approach may be used to determine the trust level. The various factors influencing the trust level may be treated as fuzzy variables with degrees of membership in different fuzzy sets (e.g., "high trust," "medium trust," "low trust"). The fuzzy logic rules may then be applied to combine these fuzzy variables and determine the overall trust level. For example, a rule could specify that if the authentication score is "high" and the history score is "medium," then the trust level should be classified as "medium-high." Additionally, the trust level may be calculated dynamically and adjusted in real-time based on ongoing interactions between the entities. In some embodiments, a time-decay factor may be applied to the history score, giving more weight to recent interactions while gradually discounting the influence of older communication events, such that the trust level reflects the most current relationship between the entities. In scenarios where multiple entities are involved, the trust level may also incorporate information from other trusted sources. For instance, if other trusted entities in the network have recently interacted with the first entity and reported positive outcomes, this information may be factored into the trust level calculation for the second entity. The calculated trust level may then be compared against one or more predefined thresholds to determine the appropriate data-sharing policies. For example, if the trust level exceeds a certain threshold, the second entity may share more sensitive information with limited encryption, whereas if the trust level is below the threshold, stronger encryption measures may be applied to protect the data.

Based on the determined trust level, the second entity may decide not only whether to encrypt the second primary information but also what specific information should be classified as primary information requiring encryption. The second entity may use the calculated trust level to assess the extent of data protection needed. For higher trust levels, the second entity may deem certain sensitive information safe to share with minimal encryption or may even transmit it in unencrypted form if the trust level exceeds a predetermined threshold. In such cases, the risk of unauthorized access is considered low, allowing the second entity to prioritize faster data exchange or less stringent encryption policies. For lower trust levels, the second entity may adopt a more cautious approach, categorizing a broader range of information as primary information that necessitates encryption. This may include proprietary data, operational details, or other sensitive content that the second entity seeks to protect. Additionally, the encryption strategy may involve selectively encrypting certain fields within the data while allowing less sensitive information to remain unencrypted.

Having determined the primary information (e.g., second primary information (sp)) that needs to be encrypted, the second entity may encrypt the second primary information (sp). The encryption may be performed based on the second primary information (sp), an encoding variable (y), and the second public key (e2), which is associated with the second entity. The encryption process ensures secure and reversible encryption, allowing only authorized entities to decrypt the information using the corresponding private key. The second public key (e2) may be a component of a public-private key pair associated with the second entity, where the key pair is generated to enable secure encryption and decryption processes. The second public key (e2) may be a large prime number or have a large prime factor. For example, the second public key (e2) may satisfy the condition 1 < e2 < ϕ(n), where ϕ(n) is Euler's totient function. Here, ϕ(n) = ϕ(p · q) = (p - 1) · (q - 1). Furthermore, e2 may be coprime to ϕ(n), ensuring that e2 has an inverse modulo ϕ(n), a necessary condition for the corresponding second private key (f2) to exist, where f2 is the number that satisfies the equation e2 · f2 = 1 mod ϕ(n). In other words, e2 is chosen such that the product of e2 and f2, when divided by ϕ(n), leaves a remainder of 1. Alternatively or additionally, the second public key (e2) may satisfy the condition 1 < e2 < λ(n), where λ(n) is a Carmichael's totient function. Here, λ(n) = λ(p · q) = lcm(p - 1, q - 1), where lcm is least common multiple. Similarly, e2 may be coprime to λ(n), ensuring that e2 has an inverse modulo λ(n), a necessary condition for the corresponding second private key (f2) to exist, where f2 is the number that satisfies the equation e2 · f2 = 1 mod λ(n).

The encoding variable (y) may be a parameter used in the encryption process to modify the second primary information (sp) prior to or during the encryption operation. The encoding variable (y) may be a constant, a randomly generated number, a value derived from some aspect of the encryption scheme, and/or the like. The encoding variable (y) may add a layer of complexity to the encryption process, making the resulting encrypted second primary information (esp) more secure. As such, in the encryption algorithm described herein, the encoding variable (y) may be a rational number that is not equal to 1.

To encrypt the second primary information (sp), the second entity may employ a binary operation, ▷, that satisfies the axioms of a quandle. Specifically, the encrypted primary information (esp) = sp ▷ y, and sp $sp ▷ y = y {\left(\frac{sp}{y}\right)}^{e 2}$. In an example embodiment, the second primary information (sp) may satisfy the condition 0 ≤ sp ≤ n - 1, where n is a composite number of the form, n = p · q, and p and q are prime numbers. The choice of n as a product of two prime numbers underpins the security of the encryption algorithm. The difficulty of factoring n back into its prime components without prior knowledge of p and q makes it computationally difficult for unauthorized parties to decrypt the primary information without access to the corresponding second private key (f2).

At block 408, the second entity may transmit the encrypted second primary information (esp) and the second supplementary information (ss) to the first entity. The transmission may occur over a secure communication channel established in response to the first communication request. The encrypted second primary information (esp) may be transmitted alongside the supplementary information (ss), which may include data that does not require encryption. The supplementary information (ss) may include data that is provided in response to the first communication request from the first entity. The supplementary information (ss) may be shared in an unencrypted form when it does not contain sensitive or proprietary content. The supplementary information (ss) may address the specific types of data that the first entity initially requested, such as updates about road conditions, traffic patterns, weather reports, or non-critical sensor readings that the second entity has collected. By transmitting the supplementary information (ss) along with the encrypted second primary information (esp), the second entity may allow the first entity to access useful data while still safeguarding any sensitive content.

Upon receiving the response from the second entity, the first entity may review the supplementary information (ss) and determine whether it needs additional details that may be part of the encrypted second primary information (esp). If the supplementary information (ss) alone does not satisfy the first entity's requirements, the first entity may initiate a follow-up communication to request access to specific portions of the primary information that were previously encrypted. In such cases, the second entity can then evaluate the trust level and decide whether to retransmit a response to the first entity, potentially allowing access to certain primary information that was initially protected. This may involve decrypting specific portions of the encrypted second primary information (esp) or sharing additional details that meet the first entity's needs, based on the established trust level and the nature of the requested information. In some embodiments, the transmission may include metadata or additional information to facilitate processing by the first entity, such as timestamps, data format identifiers, or indications of which portions of the transmission are encrypted. The use of metadata may assist the first entity in properly interpreting and handling the received data.

In some embodiments, either concurrently with or after transmitting the encrypted second primary information (esp) and second supplementary information (ss) to the first entity, the second entity may initiate a follow-up communication by transmitting a second communication request. The second communication request may serve to continue the information exchange and ensure a two-way interaction, allowing the second entity to inquire about relevant data from the first entity. For example, the second entity may wish to obtain updated information regarding conditions that could impact its operation, such as new environmental data, changes in nearby traffic patterns, or recent road incidents that the first entity has detected. The second communication request may also be used to synchronize data between the entities, such as updating operational parameters or sharing diagnostic information that can help identify potential mechanical issues that both entities may be experiencing. In this way, the second communication request supports a dynamic, ongoing exchange of information rather than a one-way broadcast.

The second entity's decision to transmit a follow-up communication request may also be driven by the need to confirm the receipt of specific data or to verify that the information transmitted to the first entity has been processed correctly. For example, if the second entity has shared critical data that requires a coordinated response-such as instructions for maneuvering in a complex traffic situation or alerts about hazards in the area-it may seek acknowledgment from the first entity to ensure mutual understanding and effective coordination. This acknowledgment may be requested as part of the second communication request, enabling the first entity to confirm that it has received and understood the transmitted information.

Upon receiving the second communication request, the first entity may perform similar steps to those undertaken by the second entity in response to the initial communication request. Specifically, the first entity may determine the level of trust associated with the second entity, taking into account factors such as the context of the communication request, any authentication credentials provided, and the history of interactions between the entities or other entities associated with the same owner. Based on the assessed trust level, the first entity may decide what information needs to be protected as primary information (e.g., first primary information), which may require encryption before transmission. This process ensures that sensitive or proprietary data is adequately secured, while non-sensitive information may be shared more freely, facilitating the ongoing exchange.

The first entity may then encrypt, using the quandle-based cryptographic framework described herein, first primary information (fp) associated therewith using a first public encryption key (e1), which is linked to the first entity. Similar to the encryption process performed by the second entity, the first entity may use an encoding variable (y) during the encryption of the first primary information (fp) to add an additional layer of security. The encoding variable (y) may be a parameter that modifies the first primary information (fp) during the encryption operation, making it more resistant to unauthorized access. The encryption may be performed using a binary operation, *▷* , that satisfies the axioms of a quandle, resulting in the encrypted first primary information (efp), where (efp) = fp *▷* y, and $fp ▷ y = y {\left(\frac{fp}{y}\right)}^{e 1}$. Here, the first public encryption key (e1) may be part of the encryption operation, ensuring that only an authorized entity with the corresponding private key can decrypt the information. The encoding variable (y) may be a constant, a randomly generated number, or derived from the encryption scheme itself, adding complexity to the encryption and enhancing the security of the encrypted data.

Following the encryption of the first primary information (fp), the first entity may transmit the encrypted first primary information (efp) along with the first supplementary information (fs) to the second entity. The transmission may occur in response to the second communication request received from the second entity, forming a bidirectional exchange of information. The encrypted first primary information (efp) ensures that sensitive or proprietary data associated with the first entity is protected, allowing the second entity to receive the information securely. The first supplementary information (fs) may include data relevant to the second entity's request, such as the first entity's current status, recent observations, or other non-sensitive details that do not require encryption.

Upon receiving the response from the first entity, the second entity may review the first supplementary information (fs) provided and determine whether it requires additional details that may be part of the encrypted first primary information (esp). If the first supplementary information (fs) does not fulfill the second entity's requirements or if further specific data is necessary, the second entity may initiate a follow-up communication to request access to certain portions of the primary information that were previously encrypted by the first entity. In response to the follow-up communication request, the first entity may reassess the trust level associated with the second entity, considering factors such as the context of the request, any authentication credentials provided, and the history of past interactions. Based on this reassessment, the first entity may decide whether to grant access to the requested encrypted information.

In some embodiments, the second entity may establish an initial communication link with the first entity in response to the first communication request. The initial communication link may serve as a preliminary secure connection, allowing the entities to exchange data while minimizing the overhead associated with setting up the connection. For instance, the second entity may use the initial communication link to transmit the encrypted second primary information (esp) and second supplementary information (ss) in response to the first communication request. If the first entity then initiates a follow-up request for additional details from the second primary information, this request and any further responses may also be communicated via the initial link. Similarly, the first entity may use the initial communication link to transmit the encrypted first primary information (efp) and first supplementary information (fs) in response to the second communication request. If the second entity then initiates a follow-up request for additional details from the first primary information, this request and any further responses may also be communicated via the initial link.

The initial communication link may utilize a short encryption key for securing the data transmission, where the key length is less than or equal to 1,024 bits, allowing for a balance between security and efficiency during the early stages of communication. The shorter key length helps facilitate rapid key exchange and encryption processes, reducing latency and enabling the entities to quickly establish a secure communication channel. While the shorter key may not provide the highest level of cryptographic security, it is sufficient for initial authentication and for protecting data during the preliminary stages of the communication process.

Once the initial encrypted exchanges are successfully completed, the communication link can transition to a more secure state, such as a sustained communication link, where a longer encryption key is employed to enhance the security of ongoing data exchanges. Such a transition may involve establishing a more secure and long-term channel for continued interactions, using a longer encryption key than was used during the initial communication link. In specific embodiments, the long key may have a key length that may be equal to or greater than 2048 bits. The transition from the initial communication link, which uses a short encryption key, to the sustained communication link with a longer encryption key may be triggered by various factors, depending on the requirements of the system and the nature of the communication between the entities. For instance, the transition may occur automatically after the successful transmission of initial encrypted data, such as the encrypted second primary information (esp) and second supplementary information (ss) from the second entity, or the encrypted first primary information (efp) and first supplementary information (fs) from the first entity. Once both entities confirm receipt of the data without any communication errors or inconsistencies, they may switch to the sustained communication link to enhance security for future exchanges. Alternatively or additionally, if the initial communication establishes a level of mutual trust between the entities, based on factors such as valid authentication credentials, verified digital certificates, or successful integrity checks of the transmitted data, the entities may transition to the sustained communication link. This transition can occur once both entities agree that the initial authentication and encryption parameters meet the security requirements for continued communication. Alternatively or additionally, the transition may be triggered after a predefined time period has elapsed during which the initial communication link remains active. For example, if the initial communication link has been maintained for a certain number of seconds or minutes without any security incidents or errors, the entities may switch to a longer encryption key for subsequent communication. The length of the time-based threshold may be configurable depending on the desired balance between communication efficiency and security. Alternatively or additionally, the transition to a sustained communication link may be based on the number of data exchanges that have occurred over the initial communication link. For instance, after a certain number of successful encrypted data transmissions between the entities, the system may determine that it is appropriate to switch to a more secure communication link. Alternatively or additionally, in some cases, the nature of the communication may change, prompting a transition to the sustained communication link. For example, if the entities begin discussing higher-priority or more sensitive information (e.g., emergency coordination, critical system diagnostics, or proprietary data), they may upgrade to a longer encryption key to provide additional security for the ongoing data exchange. Alternatively or additionally, the transition may occur in response to changes in the entities' operating environment or network conditions. For instance, if the entities detect an increased risk of eavesdropping or network attacks, they may automatically switch to the sustained communication link to enhance security. Similarly, if one of the entities moves into a higher-risk area (e.g., a crowded public space with many potential network threats), the system may initiate the transition to a longer encryption key for added protection.

The sustained communication link may establish a higher level of security and is used for all future communications between the entities as long as the entities in an immediate vicinity of one another. If the entities move out of their immediate vicinity and then later come back within the same range, they may transition directly into a sustained communication link without having to re-establish the initial communication link. Since the initial communication link was already set up and verified, the entities can resume secure communications more efficiently by leveraging the previous authentication and encryption parameters. In some embodiments, the entities may store session-specific data, such as cryptographic keys, authentication tokens, or communication history, to facilitate the rapid re-establishment of the sustained communication link. This stored data may be used to validate that the entities are indeed the same ones that previously communicated, allowing for a streamlined resumption of secure communications without the overhead of reinitiating the entire authentication process. Alternatively, the entities may implement a time-based or event-based mechanism to determine how long session-specific data remains valid for direct re-establishment of the sustained communication link. For example, if the entities go out of range and then come back within a pre-defined time period, they may use the existing cryptographic parameters to resume the sustained communication link. If a longer period has elapsed, the entities may perform a partial re-authentication process or refresh the encryption keys while still skipping the initial communication link setup to expedite the reconnection process. In cases where there have been significant changes in the entities' operational environment or configuration, they may conduct a lightweight verification process to confirm that the security requirements are still met. For instance, if one of the entities has experienced a configuration update or a change in its trust level, this may trigger an additional check before resuming the sustained communication link, ensuring that the resumed connection adheres to updated security policies while maintaining efficiency in re-establishing secure communication.

The following scenarios illustrate how different types of entities may establish an initial communication link and then transition to a sustained, more secure connection within a dynamic network environment.

Autonomous vehicles may connect to a dynamic network when entering a new region, such as a smart city or industrial site. Initially, each vehicle may use a short encryption key to establish the initial communication link with nearby RSUs (e.g., RSU 120) to exchange preliminary information, such as traffic updates or road conditions. Once the vehicle receives confirmation that the connection is stable and all authentication checks have passed, it may transition to a longer encryption key for ongoing communication. The sustained link may then support secure data exchanges for real-time updates on navigation, hazard alerts, or coordinated driving maneuvers with other vehicles, such as lane merging or platooning.

Drones operating in a temporary network at an emergency response site may establish initial communication links using short encryption keys for rapid connection to the network infrastructure, such as command units or other drones. For instance, when drones are deployed for search and rescue operations, they may quickly authenticate themselves with a nearby central management unit (e.g., central management unit 130) using the initial link to share real-time aerial footage and sensor data. As the operation progresses, the drones may transition to a sustained communication link using longer encryption keys to protect sensitive data related to search patterns, victim locations, or drone flight paths.

Central management units (e.g., central management unit 130), such as those deployed in a smart city network or emergency command center, may act as coordinators for the establishment and management of communication links. When a new entity, such as an autonomous vehicle or drone, is detected in the vicinity, the central management units may initiate the process of setting up an initial communication link using a short encryption key. After the initial authentication and data exchange (e.g., sending network access credentials or providing updates on network conditions), the central management units may trigger a transition to a longer encryption key for more secure ongoing communications. This allows the central management units to manage a secure, coordinated exchange of information across multiple entities while maintaining the confidentiality of sensitive data, such as traffic management protocols or emergency response strategies.

RSUs (e.g., RSU 120), located along highways or intersections, may facilitate the connection of passing vehicles or drones to a dynamic network. For example, an RSU may detect an approaching autonomous vehicle and establish an initial communication link using a short encryption key for quick data transmission. The vehicle and RSU may exchange initial data such as traffic signal status, speed limits, or road hazards. Once the vehicle has been authenticated and the communication is stable, the RSU may prompt a transition to a longer encryption key for the secure transmission of more detailed data, such as the vehicle's trajectory or real-time environmental sensor information.

In an industrial or construction zone, various autonomous machinery, such as excavators, drones, or delivery vehicles, may connect to a temporary network managed by a central management unit. Upon arrival in the work area, each machine may establish an initial communication link using a short encryption key for rapid authentication with the network infrastructure. As the machines begin coordinated tasks, such as synchronized lifting or material transport, the system may automatically transition to a longer encryption key for secure ongoing data exchange. This ensures that data related to machine operations, task coordination, or safety protocols remains protected during the work.

In a rescue setting, entities such as vehicles, drones, and mobile command units may connect to a temporary communication network set up in a deployed area. Each entity may initially use a short encryption key to establish communication links with a central management unit or other entities, allowing for quick authentication and integration into the network. After the initial exchange of data, such as situational updates or mission directives, the communication may transition to a sustained link with a longer encryption key to provide secure and resilient data protection throughout the operation.

In emergency response scenarios, such as firefighting operations, drones and vehicles may establish initial communication links with temporary command units deployed at the scene. The initial link, using a short encryption key, allows the entities to rapidly share critical data, such as real-time video feeds, environmental conditions, or locations of responders. As the response progresses and more detailed data exchanges are required, the command unit may coordinate a transition to a longer encryption key for secure ongoing communication to protect confidentiality of sensitive information like rescue strategies or hazardous material detection.

It should be noted that the terms "short key" and "long key" as used herein are relative and may evolve over time as encryption standards and computational capabilities advance. In the present disclosure, a short key may refer to a key length that provides a balance between security and efficiency for initial communication links. Similarly, a long key may refer to a key length that ensures enhanced security for sustained communication links. However, as technology progresses and computational power increases, the definitions of short and long keys may shift to accommodate higher levels of security. For example, what is currently considered a long key may become a short key in future implementations as encryption requirements grow more stringent. Thus, the use of specific key lengths in this disclosure is intended to be illustrative and not limiting, and the key lengths for short and long keys may vary depending on future developments in encryption technology and security standards.

### Example Method for Transitioning Connection between Entities

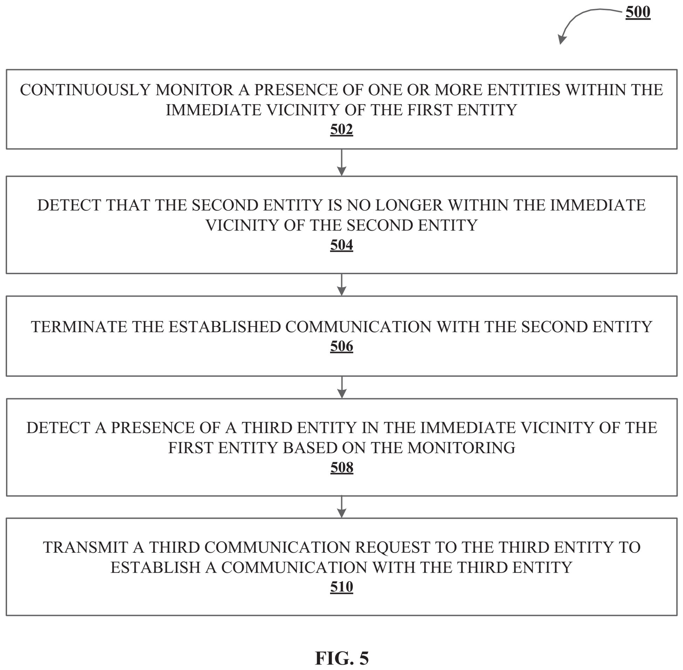

FIG. 5 illustrates an example method 500 for transitioning connection between entities, in accordance with an embodiment of the invention. As shown in block 502, the first entity may continuously monitor the presence of one or more entities within the immediate vicinity of the first entity. The first entity may monitor for the presence of entities through various techniques, including proximity sensing, signal strength analysis, network discovery protocols, or direct wireless communication. In some embodiments, the first entity may establish a connection radius, which represents the effective range of its communication modules, such as wireless transceivers or proximity sensors. The connection radius may be static or dynamically adjusted based on factors such as environmental conditions, network density, or specific communication protocols in use.

In addition, the monitoring process may involve periodic scanning or continuous assessment to track entities entering or exiting the immediate vicinity of the first entity. In some cases, the monitoring process may include verification measures, such as checking digital certificates or comparing network credentials, to ensure that detected entities meet authorization standards. In alternative embodiments, the first entity may adjust its monitoring frequency based on operational needs, such as heightened scanning intervals during active communication or lower frequencies in stable network conditions.

As shown in block 504, the first entity may detect that the second entity is no longer within the immediate vicinity of the second entity. The detection may be based on a reduction in signal strength, loss of a unique network identifier, or other proximity-sensing methods. For instance, if the second entity moves outside the first entity's connection radius, the monitoring system may register the second entity's departure. In some embodiments, the detection of the second entity's absence may occur through periodic scans or continuous monitoring, allowing the first entity to promptly identify changes in network composition. Alternatively, the detection may incorporate confirmation protocols, such as repeated signal loss checks or timeout mechanisms, to verify the second entity's departure before terminating active communication. In some configurations, the first entity may establish a threshold for the duration or extent of signal reduction before concluding that the second entity has left the vicinity.

As shown in block 506, the first entity may terminate the established communication with the second entity. The termination may involve closing the active communication channel and ceasing any data exchange processes between the two entities. In some embodiments, the first entity may send a termination signal to formally close the communication, ensuring that both entities recognize the end of the interaction. This process may help conserve network resources by promptly disconnecting inactive or distant entities. Alternatively, the termination of communication may be automated, with the first entity ceasing communication after a preconfigured timeout period following the loss of signal. In further embodiments, the first entity may log the disconnection event or update its internal network map to reflect the second entity's departure, ensuring accurate records of nearby entities and active connections.

As shown in block 508, the first entity may detect a presence of a third entity in the immediate vicinity of the first entity based on the monitoring. As described herein, the detection may occur through various methods, such as proximity sensing, network discovery protocols, or analysis of signal characteristics. The first entity may identify the third entity by recognizing a unique network identifier, signal strength, or other predefined markers that indicate a nearby device, same or similar to the way in which the first entity detected the presence of the second entity (as described in FIG. 4).

As shown in block 510, the first entity may transmit a third communication request to the third entity to establish a communication with the third entity. The request may serve as an initial handshake, signaling the first entity's intent to initiate a secure data exchange with the third entity. The third communication request may include relevant information to facilitate the establishment of a secure connection, same or similar to the way in which the first entity transmitted the first communication request to the second entity (as described in FIG. 4).

The overall topology of the connection between entities may depend on the relative position of each entity with respect to others in the network. For example, in a convoy of autonomous vehicles, each vehicle may establish direct communication links with its immediate neighbors-typically the vehicles directly in front and behind. Such a proximity-based connection structure allows each vehicle to maintain a minimal set of links, reducing network load and optimizing resource use within the convoy. Such a linear topology supports efficient data flow and coordination among vehicles in close, sequential arrangements.

In dynamic settings, where subsets of entities may exit the convoy-such as at interchanges or divergent routes-the network topology can adjust accordingly. Entities remaining in the convoy may retain their established links, allowing the overall structure to persist without interruption. Meanwhile, entities that exit the convoy may form a new network segment or connect with other nearby entities, enabling seamless reconfiguration of communication links based on real-time positional changes. This adaptable framework supports ad-hoc network configurations, allowing the topology to shift dynamically in response to the entities' positions and movement patterns. Accordingly, the system facilitates a variety of connection topologies, including linear, star, or mesh configurations, as suited to the spatial arrangement and operational context of the entities involved.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. The steps and modifications to the steps of the method described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system for secure quandle-based cryptography in dynamic network environments, the system comprising:
   a first entity; and
   a second entity;
   wherein the first entity is configured to:
      detect a presence of the second entity in an immediate vicinity of the first entity; and
      in response, transmit, to the second entity, a first communication request to establish a communication with the second entity, and
   wherein the second entity is configured to:
      encrypt, using a quandle-based cryptography framework, second primary information (sp) associated with the second entity using a second public key (e2) in response to the first communication request; and
      transmit the encrypted second primary information (esp) and second supplementary information (ss) associated with the second entity to the first entity.
Clause 2. The system of Clause 1, wherein the second public key (e2) is associated with the second entity.
Clause 3. The system of Clause 1, wherein the second entity is one of a second set of entities associated with a second owner, and wherein the second public key (e2) is associated with the second set of entities.
Clause 4. The system of Clause 1, wherein the second entity is further configured to:
   transmit, to the first entity, a second communication request following the transmission of the encrypted second primary information (esp) and second supplementary information (ss).
Clause 5. The system of Clause 4, wherein the first entity is further configured to:
   encrypt, using the quandle-based cryptography framework, first primary information (fp) associated with the first entity using a first public key (e1), wherein the first public key (e1) is associated with the first entity; and
   transmit the encrypted first primary information (efp) and first supplementary information (fs) associated with the second entity to the first entity in response to the second communication request.
Clause 6. The system of Clause 5, wherein the first entity is one of a first set of entities associated with a first owner, and wherein the first public key (e1) is associated with the first set of entities.
Clause 7. The system of Clause 1, wherein the second entity is further configured to:
   generate the encrypted second primary information (esp) based on the second primary information (sp), an encoding variable (y), and the second public key (e2), wherein *esp* = *sp* ▷ *y,* wherein ▷ is a binary operation that satisfy axioms of a quandle, wherein 0 ≤ *sp* ≤ *n* - 1, wherein *n* is a composite number of the form, *n* = *p · q,* and wherein p and q are prime numbers.
Clause 8. The system of Clause 7, wherein $sp ▷ y = y {\left(\frac{sp}{y}\right)}^{e 2}$, wherein 1 *< e*2 < *ϕ*(*n*)*,* wherein *ϕ*(*n*) is Euler's totient function, and wherein *ϕ*(*n*) = *ϕ*(*p* · *q*) *=* (*p* - 1) *·* (*q -* 1).
Clause 9. The system of Clause 1, wherein the second entity is further configured to:
   establish an initial communication link with the first entity, and wherein transmitting the encrypted second primary information (esp) comprises using the initial communication link.
Clause 10. The system of Clause 9, wherein the second public key (e2) is a short encryption key having a length that is less than or equal to 1024 bits.
Clause 11. The system of Clause 10, wherein the second entity is configured to:
   transition from the initial communication link to a sustained communication link upon successful transmission of the encrypted second primary information (esp) and second supplementary information (ss) to the first entity, wherein transitioning further comprises transitioning the second public key (e2) from the short encryption key to a long encryption key having a length that is greater than or equal to 2048 bits.
Clause 12. The system of Clause 1, wherein the second primary information (sp) comprises operational information associated with the second entity, wherein the operational information comprises at least one of internal system information, monetizable operational information, control commands, or security protocols and procedures.
Clause 13. The system of Clause 1, wherein the second supplementary information (ss) comprises status information associated with the second entity, wherein the status information comprises at least one of positional information, functional state, or captured sensor information.
Clause 14. The system of Clause 1, wherein the first entity is further configured to:
   continuously monitor a presence of one or more entities within the immediate vicinity of the first entity;
   detect that the second entity is no longer within the immediate vicinity of the second entity; and
   terminate the established communication with the second entity.
Clause 15. The system of Clause 14, wherein the first entity is further configured to:
   detect a presence of a third entity in the immediate vicinity of the first entity based on the monitoring; and
   transmit a third communication request to the third entity to establish a communication with the third entity.
Clause 16. A method for secure quandle-based cryptography in dynamic network environments, the method comprising:
   receiving, from a first entity, a first communication request to establish a communication with the second entity;
   encrypting, by the second entity, using a quandle-based cryptography framework, second primary information (sp) associated with a second entity using a second public key (e2) in response to the first communication request; and
   transmitting, by the second entity, the encrypted second primary information (esp) and second supplementary information (ss) associated with the second entity to the first entity,
   wherein the first communication request is received in response to detecting a presence of the second entity in an immediate vicinity of the first entity.
Clause 17. The method of Clause 16, wherein the second public key (e2) is associated with the second entity.
Clause 18. The method of Clause 16, wherein the second entity is one of a second set of entities associated with a second owner, and wherein the second public key (e2) is associated with the second set of entities.
Clause 19. The method of Clause 16, wherein the method further comprises:
   generating the encrypted second primary information (esp) based on the second primary information (sp), an encoding variable (y), and the second public key (e2), wherein *esp = spi* ▷ *y,* wherein ▷ is a binary operation that satisfy axioms of a quandle, wherein 0 ≤ *sp* ≤ *n* - 1, wherein *n* is a composite number of the form, *n* = *p · q,* and wherein *p* and *q* are prime numbers.
Clause 20. The method of Clause 19, wherein $sp ▷ y = y {\left(\frac{sp}{y}\right)}^{e 2}$*,* wherein 1 < *e*2 < *ϕ*(*n*), wherein *ϕ*(*n*) is Euler's totient function, and wherein *ϕ*(*n*) = *ϕ*(*p · q*) *=* (*p -* 1) *·* (*q -* 1).
Clause 21. The method of Clause 16, wherein the method further comprises:
   establishing an initial communication link with the first entity, and wherein transmitting the encrypted second primary information (esp) comprises using the initial communication link.
Clause 22. The method of Clause 21, wherein the second public key (e2) is a short encryption key having a length that is less than or equal to 1024 bits.
Clause 23. The method of Clause 22, wherein the method further comprises:
   transitioning from the initial communication link to a sustained communication link upon successful transmission of the encrypted second primary information (esp) and second supplementary information (ss) to the first entity, wherein transitioning further comprises transitioning the second public key (e2) from the short encryption key to a long encryption key having a length that is greater than or equal to 2048 bits.
Clause 24. The method of Clause 16, wherein the second primary information (sp) comprises operational information associated with the second entity, wherein the operational information comprises at least one of internal system information, monetizable operational information, control commands, or security protocols and procedures.
Clause 25. The method of Clause 16, wherein the second supplementary information (ss) comprises status information associated with the second entity, wherein the status information comprises at least one of positional information, functional state, or captured sensor information.

## Claims

1. A system for secure quandle-based cryptography in dynamic network environments, the system comprising:
a first entity; and
a second entity;
wherein the first entity is configured to:
detect a presence of the second entity in an immediate vicinity of the first entity; and
in response, transmit, to the second entity, a first communication request to establish a communication with the second entity, and
wherein the second entity is configured to:
encrypt, using a quandle-based cryptography framework, second primary information (sp) associated with the second entity using a second public key (e2) in response to the first communication request; and
transmit the encrypted second primary information (esp) and second supplementary information (ss) associated with the second entity to the first entity.

2. The system of Claim 1, wherein the second public key (e2) is associated with the second entity.

3. The system of Claim 1 or 2, wherein the second entity is one of a second set of entities associated with a second owner, and wherein the second public key (e2) is associated with the second set of entities.

4. The system of Claim 1, 2, or 3, wherein the second entity is further configured to:
transmit, to the first entity, a second communication request following the transmission of the encrypted second primary information (esp) and second supplementary information (ss).

5. The system of Claim 4, wherein the first entity is further configured to:
encrypt, using the quandle-based cryptography framework, first primary information (fp) associated with the first entity using a first public key (e1), wherein the first public key (e1) is associated with the first entity; and
transmit the encrypted first primary information (efp) and first supplementary information (fs) associated with the second entity to the first entity in response to the second communication request.

6. The system of Claim 5, wherein the first entity is one of a first set of entities associated with a first owner, and wherein the first public key (e1) is associated with the first set of entities.

7. The system of any preceding Claim, wherein the second entity is further configured to:
generate the encrypted second primary information (esp) based on the second primary information (sp), an encoding variable (y), and the second public key (e2), wherein *esp* = *sp* ▷ *y,* wherein ▷ is a binary operation that satisfy axioms of a quandle, wherein 0 ≤ *sp* ≤ *n* - 1, wherein *n* is a composite number of the form, *n* = *p · q,* and wherein p and *q* are prime numbers.

8. The system of Claim 7, wherein $sp ▷ y = y {\left(\frac{sp}{y}\right)}^{e 2}$*,* wherein 1 < *e*2 < *ϕ*(*n*), wherein *ϕ*(*n*) is Euler's totient function, and wherein *ϕ*(*n*) = *ϕ*(*p · q*) *=* (*p -* 1) *· (q -* 1).

9. The system of any preceding Claim, wherein the second entity is further configured to:
establish an initial communication link with the first entity, and wherein transmitting the encrypted second primary information (esp) comprises using the initial communication link.

10. The system of Claim 9, wherein the second public key (e2) is a short encryption key having a length that is less than or equal to 1024 bits.

11. The system of Claim 10, wherein the second entity is configured to:
transition from the initial communication link to a sustained communication link upon successful transmission of the encrypted second primary information (esp) and second supplementary information (ss) to the first entity, wherein transitioning further comprises transitioning the second public key (e2) from the short encryption key to a long encryption key having a length that is greater than or equal to 2048 bits.

12. The system of any preceding Claim, wherein the second primary information (sp) comprises operational information associated with the second entity, wherein the operational information comprises at least one of internal system information, monetizable operational information, control commands, or security protocols and procedures.

13. The system of any preceding Claim, wherein the second supplementary information (ss) comprises status information associated with the second entity, wherein the status information comprises at least one of positional information, functional state, or captured sensor information.

14. The system of any preceding Claim, wherein the first entity is further configured to:
continuously monitor a presence of one or more entities within the immediate vicinity of the first entity;
detect that the second entity is no longer within the immediate vicinity of the second entity; and
terminate the established communication with the second entity, wherein the first entity is further configured to:
detect a presence of a third entity in the immediate vicinity of the first entity based on the monitoring; and
transmit a third communication request to the third entity to establish a communication with the third entity.

15. A method for secure quandle-based cryptography in dynamic network environments, the method comprising:
receiving, from a first entity, a first communication request to establish a communication with the second entity;
encrypting, by the second entity, using a quandle-based cryptography framework, second primary information (sp) associated with a second entity using a second public key (e2) in response to the first communication request; and
transmitting, by the second entity, the encrypted second primary information (esp) and second supplementary information (ss) associated with the second entity to the first entity,
wherein the first communication request is received in response to detecting a presence of the second entity in an immediate vicinity of the first entity.
